(19) Europäisches Patentamt / European Patent Office / Office européen des brevets

(11) **EP 4 254 906 B1**

(12) **EUROPEAN PATENT SPECIFICATION**

(45) Date of publication and mention
of the grant of the patent:
**07.01.2026  Bulletin 2026/02**

(21) Application number: **21913612.4**

(22) Date of filing: **23.11.2021**

(51) International Patent Classification (IPC):
**H04L 67/12** *(2022.01)*      **G01C 21/00** *(2006.01)*
**H04L 69/22** *(2022.01)*      **H04W 4/44** *(2018.01)*
**H04W 4/46** *(2018.01)*

(52) Cooperative Patent Classification (CPC):
**H04L 67/12; G01C 21/3841; G01C 21/3885;
H04L 69/22;** H04W 4/44; H04W 4/46

(86) International application number:
**PCT/CN2021/132510**

(87) International publication number:
**WO 2022/142870 (07.07.2022 Gazette 2022/27)**

(54) **DATA TRANSMISSION METHOD AND APPARATUS FOR INTERNET OF VEHICLES, STORAGE MEDIUM, AND SYSTEM**

DATENÜBERTRAGUNGSVERFAHREN UND -VORRICHTUNG FÜR INTERNET VON FAHRZEUGEN, SPEICHERMEDIUM UND SYSTEM

PROCÉDÉ ET APPAREIL DE TRANSMISSION DE DONNÉES POUR L'INTERNET DES VÉHICULES, SUPPORT DE STOCKAGE ET SYSTÈME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2020  CN 202011576388**

(43) Date of publication of application:
**04.10.2023  Bulletin 2023/40**

(73) Proprietor: **Shenzhen Yinwang Intelligent
Technologies Co., Ltd.
Shenzhen, Guangdong 518129 (CN)**

(72) Inventor: **LIU, Jianqin
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
**WO-A1-2020/140890      WO-A1-2020/257642
CN-A- 109 299 777       CN-A- 110 674 130
CN-A- 111 866 069**

- **ETSI: "ETSI TR 103 562 V2.1.1 (2019-12);
Intelligent Transport Systems (ITS); Vehicular
Communications; Basic Set of Applications;
Analysis of the Collective Perception Service
(CPS); Release 2", 18 December 2019
(2019-12-18), pages 1 - 119, XP093293662,
Retrieved from the Internet <URL:https://www.
etsi.org/deliver/etsi_tr/103500_103599/103562/
02.01.01_60/tr_103562v020101p.pdf> [retrieved
on 20250708]**

**Description**

**CROSS-REFERENCE TO RELATED APPLICATIONS**

Priority is claimed to Chinese Patent Application No. 202011576388.1, filed with the China National Intellectual Property Administration on December 28, 2020 and entitled "DATA TRANSMISSION METHOD AND APPARATUS FOR INTERNET OF VEHICLES, STORAGE MEDIUM, AND SYSTEM".

**TECHNICAL FIELD**

This disclosure generally relates to the field of intelligent transportation technologies, and the invention in particular relates to a data transmission method and apparatus for an internet of vehicles, and a computer-readable storage medium.

**BACKGROUND**

A high definition map (High Definition Map, HD Map) is a map that has high positioning accuracy and can update data in real time. The high definition map mainly serves autonomous vehicles, and provides lane-level planning in road sections and ego vehicle positioning assistance for the autonomous vehicles.

In a solution, a dedicated map data collection vehicle collects data, and map update is performed based on the data collected by the dedicated map data collection vehicle. However, since the dedicated map data collection vehicle costs much and has a limited quantity, a data volume collected by the professional map collection vehicle can hardly satisfy an autonomous vehicle requiring map data update by hour or even by minute.

With continuous development of intelligence in the entire vehicle industry, more vehicles are mounted with various sensors, and a vehicle may transmit data collected by the sensors to a cloud server through a network. In addition to the vehicle, more devices have a data collection function, for example, a road side unit RSU. The cloud server may make and update a high definition map based on data collected by a plurality of data collection devices (for example, a plurality of vehicles), and issue an updated high definition map to the vehicle. In the future, making and updating the high definition map in this way will become a mainstream.

Currently, a data collection device reports data in a fixed format, and the data collection device can only report data of one data type: object level data. However, with an increase in data collection devices, data types of data collected by the data collection devices increase accordingly. If the data is still reported in a current format, a data volume received by the cloud server is reduced. Consequently, reliability of data fusion is compromising.

WO 2020/257642 A1 discloses techniques for implementing Collective Perception Services in Intelligent Transport Systems.

Document "ETSI TR 103 562 V2.1.1 (2019-12); Intelligent Transport Systems (ITS); Vehicular Communications; Basic Set of Applications; Analysis of the Collective Perception Service (CPS); Release 2", published on 18 December 2019, describes the Collective Perception Service for supporting applications in the domain of road and traffic safety applications.

SUMMARY

The present invention is defined by the subject-matter of the independent claims. Further details are defined in the dependent claims.

The object of the present inventnion is to provide a data transmission method and apparatus for an internet of vehicles, and a computer-readable storage medium, to support a terminal device in the internet of vehicles in reporting data of a plurality of data types such that reliability of data fusion can be improved. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides a data transmission method for an internet of vehicles. The method may be applied to a terminal device, and the method may be performed by a data transmission apparatus on the terminal device. The data transmission apparatus on the terminal device may be a component in a vehicle, a vehicle, a mobile phone, or the like. In the method, the data transmission apparatus obtains first data, where the first data is obtained based on data collected by at least one sensor; generates a first message based on the first data; and sends the first message. The first message includes the first data. According to the invention, the first message includes first indication information and second indication information, and preferably third indication information.

Because the first indication information indicates a data type of the first data, when the first message includes the first indication information, a terminal device may be supported in reporting data of one or more data types. In this way, a cloud server may receive data of more data types, so that reliability of data fusion can be improved. In addition, based on the first indication information, the cloud server may decode the first message by using an algorithm corresponding to the data type of the first data, so that a decoding success rate can be increased.

Because the second indication information indicates a format of the first message, when the first message includes the third indication information, the terminal device may be supported in reporting data in a plurality of formats. In this way, flexibility of data reporting can be improved. In addition, based on the second indication information, the cloud server may decode the first message based on the format of the first message, so that a decoding success rate can be increased.

Because the third indication information indicates a type of the sensor, when the first message includes the third indication information, the terminal device may be supported in reporting data collected by one or more types of sensors. In this way, the cloud server may receive data collected by more types of sensors, so that reliability during data fusion can be improved. In addition, based on the third indication information, the cloud server may decode the first message by using an algorithm corresponding to the type of the sensor that collects data, so that a decoding success rate can be increased.

In a possible implementation, the data type of the first data includes at least one of raw data, feature level data, or object level data. The raw data is data collected by the sensor, the feature level data is data that is extracted from the raw data collected by the sensor and that can represent a feature of a detected object, and the object level data is data that is extracted from the raw data or the feature level data and that can represent an attribute of the detected object.

In a possible implementation, the first message further includes the second indication information. The second indication information indicates the format of the first message. The format of the first message includes a first preset format or a second preset format.

In a possible implementation, when the first data includes information about a target element collected by using the at least one sensor, the format of the first message is the first preset format. In a possible implementation, after obtaining the data (the at least one of the raw data, the feature level data, or the object level data) by using the sensor, the terminal device does not compare the data with data on a map (or the terminal device does not make a decision on a map element change), but directly reports the data. In this case, a detected element represented by the data obtained by using the sensor is not associated with an element on the map, and the data may be reported in the first preset format. When the first message is reported in the first preset format, information about an element carried in the first message may be referred to as the information about the target element. In a possible implementation, when the format of the first message is the first preset format, the first data includes the information about the target element collected by using the at least one sensor. The information about the target element carried in the first message may be information about a feature in the feature level data, or may be information about an object in the object level data.

In a possible implementation, when the first data includes information about a map element collected by using the at least one sensor, the format of the first message is the second preset format. In another possible implementation, after obtaining the data by using the sensor, the terminal device compares the data with the data on the map (or the terminal device makes a decision on the map element change), to determine a changed element, and may report information about the changed element. In this case, the detected element represented by the data obtained by using the sensor is associated with the element on the map, and the second preset format may be used. When the first message is reported in the second preset format, the information about the element that can be carried in the first message may be referred to as the information about the map element. In this way, some operations may be performed on the terminal device in the internet of vehicles, so that a calculation amount of the cloud server can be reduced.

Further, in still another possible implementation, the information about the map element included in the first data may include: information about a changed map element that is in the map elements collected by the sensor obtaining the first data. In yet another possible implementation, when the format of the first message is the second preset format, the first data includes the information about the map element collected by using the at least one sensor. In other words, the information about the changed map element may be reported, or information about an unchanged map element may be reported.

In a possible implementation, the information about the changed map element in the map elements collected by the at least one sensor includes a map element that is in the map elements collected by the at least one sensor and that moves relative to a location of a corresponding map element in a current map.

In another possible implementation, the information about the changed map element in the map elements collected by the at least one sensor includes a map element that is in the map elements collected by the at least one sensor and that has no corresponding map element in a current map. In a possible implementation, the map element that has no corresponding map element in the current map may also be referred to as an added map element compared with the map.

In a possible implementation, the information about the changed map element is relative change information of the map element or absolute characterization information of the map element. For example, the map element is a lane line, and the lane line may move. In this case, information about the lane line may be carried in a payload area of the first message, for example, absolute characterization information of the lane line may be carried, for example, an absolute location (for example, location information in an earth coordinate system) of the lane line. Alternatively, relative change information of the lane line may be carried in the payload area, for example, a relative change amount of a changed lane line may be carried, for example, a direction of movement and a movement change amount relative to an original location. In this way, solution flexibility can be improved.

In a possible implementation, the first message includes a header area and the payload area. The first indication information is carried in the header area. The first data includes information about at least one target element or map element collected by using the at least one sensor. The payload area includes at least one element area. The information about the at least one target element or map element is carried in the at least one element area, and the information about the target element or the map element is in a one-to-one correspondence with the element area.

In another possible implementation, the first message includes the header area and the payload area. The first indication information is carried in the header area. The first data includes the information about the at least one target element or map element collected by using the at least one sensor. The payload area includes M element areas, and M is a positive integer. One of the M element areas may carry information about one element. The element may be the foregoing target element or map element. The M element areas may be used to carry information about M elements, and the M element areas may be in a one-to-one correspondence with the M elements. One of the M elements may be the foregoing target element or map element.

In a possible implementation, when the format of the first message is the second preset format, the header area further includes at least one of the following content: a map version number of the map element, a map tile number, a change type of the map element, a transmission type of the information about the map element, or a quantity of the map elements. In this way, when parsing the header area, the cloud server may obtain related information about the map and some related information about the map element, to assist in further parsing the payload area.

In a possible implementation, when the format of the first message is the second preset format, the payload area further includes at least one of the following content: an area identification corresponding to the map element, a tile identification corresponding to the map element, an element group identification corresponding to the map element, the change type of the map element, or a location information type of the map element.

In a possible implementation, the first message includes the header area and the payload area. The payload area includes at least one element area. The at least one element area includes a first element area. The first element area is used to carry information about a first element. The first element is a target element or a map element that is identified based on the data collected by the at least one sensor of the vehicle.

In a possible implementation, the first element area further includes at least one of the following content: an area identification corresponding to the first element, a tile identification corresponding to the first element, an element group identification corresponding to the first element, a change type of the first element, or a location information type of the first element. In this way, the cloud server may determine related information about the first element based on information about the first element area. This lays a foundation for updating the related information about the first element on the map.

In a possible implementation, the first indication information is carried in the header area. In this way, when receiving the first message, the cloud server may select, based on information in the header area, the algorithm corresponding to the data type of the first data for parsing, so that a success rate of data parsing can be increased.

In a possible implementation, the header area includes a first subheader area and a second subheader area. Data carried in the first subheader area is used to parse data carried in the second subheader area. In this way, when receiving the first message, the cloud server may first parse information in the first subheader area, and then parse the second subheader area based on the information in the first subheader area. This can reduce complexity of parsing the header area and increase a success rate of data parsing.

In a possible implementation, the first indication information is carried in the first subheader area. In this way, when receiving the first message, the cloud server may select, based on the information in the first subheader area, the algorithm corresponding to the data type of the first data for parsing, so that a success rate of data parsing can be increased.

In a possible implementation, the first message further includes: environment information during collection of the information about the target element or the map element by the sensor; or obstructed information of the target element or the map element collected by the sensor. In a possible implementation, the first message further includes fourth indication information corresponding to the first element. The fourth indication information indicates environment information during collection of the first element by the sensor or obstructed information of the first element. The first element is the map element or the target element.

In a possible implementation, the fourth indication information further indicates a trusted degree of the information about the first element carried in the first message. In this way, the cloud server may determine, based on the fourth indication information, reliability of the information about the first element carried in the first data, to determine a degree of impact of the information about the first element carried in the first data on updated information of the first element on the map.

In a possible implementation, the environment information during collection of data of the first element includes at least one of the following content: a lighting parameter, visibility, reflectivity, a horizontal distance, a longitudinal distance, or a weather parameter. The obstructed information of the first element includes at least one of the following content: an obstructed degree of the first element, visibility of the first element, or an obstructed degree of a connection line between the first elements or vehicles.

According to a second but not claimed aspect, this application provides a data transmission method for an internet of vehicles. The method may be applied to a server, for example, the cloud server mentioned in the foregoing content. The method may be performed by a map update apparatus on the server. The map update apparatus on the server may be a component in the server, the server, or the like. In the method, the map update apparatus receives a first message, parses the first message to obtain first data, and updates a map based on the first data. The first data is obtained based on data collected by at least one sensor of a vehicle, and the first message includes the first data. The first message includes at least one of first indication information, second indication information, and third indication information.

Because the first indication information indicates a data type of the first data, when the first message includes the first indication information, a terminal device may be supported in reporting data of one or more data types. In this way, a cloud server may receive data of more data types, so that reliability of data fusion can be improved. In addition, based on the first indication information, the cloud server may decode the first message by using an algorithm corresponding to the data type of the first data, so that a decoding success rate can be increased.

Because the third indication information indicates a type of the sensor, when the first message includes the third indication information, the terminal device may be supported in reporting data collected by one or more types of sensors. In this way, the cloud server may receive data collected by more types of sensors, so that reliability of data fusion can be improved. In addition, based on the third indication information, the cloud server may decode the first message by using an algorithm corresponding to the type of the sensor that collects data, so that a decoding success rate can be increased.

Because the second indication information indicates a format of the first message, when the first message includes the third indication information, the terminal device may be supported in reporting data in a plurality of formats. In this way, flexibility of data reporting can be improved. In addition, based on the second indication information, the cloud server may decode the first message based on the format of the first message, so that a decoding success rate can be increased.

In the second aspect, for related solutions of the first message and the first data, refer to the descriptions in the first aspect. Details are not described herein again.

Corresponding to the methods provided in the first aspect and the second aspect, this application further provides an apparatus. The apparatus may be any transmitter device or cloud server device that performs data transmission in a wireless manner, for example, a communication chip, a data transmission apparatus on a terminal device, or a map update apparatus like a map update apparatus on a server. In a communication process, a transmitter device and a cloud server device are opposite to each other. In some communication processes, a communication apparatus may be the map update apparatus of the data transmission apparatus on the terminal device or a communication chip of the map update apparatus of the data transmission apparatus on the terminal device. In some communication processes, the communication apparatus may be the map update apparatus on the server or a communication chip of the map update apparatus on the server.

According to a third aspect according to the invention, the invention also provides a communication apparatus. The communication device includes a communication unit and a processing unit, to perform any implementation of any communication method according to the first aspect and the second aspect. The communication unit is configured to perform functions related to sending and receiving. Optionally, the communication unit includes a receiving unit and a sending unit. In a design, the communication apparatus is a communication chip, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any implementation of any communication method according to the first aspect and the second aspect.

According to a fourth aspect according to the invention, the invention also provides the following communication apparatus. The communication apparatus is the data transmission apparatus on the terminal device or the map update apparatus on the server. The communication device includes a processor and a memory. Optionally, the communication apparatus further includes a transceiver. The memory is configured to store a computer program or instructions. The processor is configured to invoke and run the computer program or the instructions from the memory. When the processor executes the computer program or the instructions in the memory, the communication apparatus is enabled to perform any implementation of any communication method in the first aspect and the second aspect.

Optionally, there are one or more processors, and there are one or more memories.

Optionally, the memory may be integrated with the processor, or the memory and the processor are separately disposed.

Optionally, the transceiver may include a transmitter machine (transmitter) and a receiver machine (receiver).

According to a fifth aspect according to the invention, the invention also provides the following communication apparatus including a processor. The processor is coupled to a memory, and may be configured to perform the method according to either of the first aspect and the second aspect and any one of the possible implementations of the first aspect and the second aspect. Optionally, the communication apparatus further includes a memory. Optionally, the communication apparatus further includes a communication interface, and the processor is coupled to the communication interface.

In an implementation, the communication apparatus is a data transmission apparatus on a terminal device. When the communication apparatus is the data transmission apparatus on the terminal device, the communication interface may be a transceiver or an input/output interface. Optionally, the transceiver may be a transceiver circuit. Optionally, the input/output interface may be an input/output circuit.

In another implementation, the communication apparatus is a map update apparatus on a server. When the communication apparatus is the map update apparatus on the server, the communication interface may be a transceiver or an input/output interface. Optionally, the transceiver may be a transceiver circuit. Optionally, the input/output interface may be an input/output circuit.

In still another implementation, the communication apparatus is a chip or a chip system. When the communication apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth but not claimed aspect, a system is provided. The system includes the foregoing data transmission apparatus on the terminal device and the foregoing map update apparatus on the server.

According to a seventh but not claimed aspect, a vehicle is provided. The vehicle includes the foregoing data transmission apparatus on the terminal device.

According to an eighth but not claimed aspect, a computer program product is provided. The computer program product includes a computer program (which may also be referred to as code or instructions). When the computer program is run, a communication apparatus is enabled to perform the method according to any possible implementation of the first aspect, or a communication apparatus is enabled to perform the method according to any implementation of the first aspect and the second aspect.

According to a ninth aspect according to the invention, the invention also provides a computer-readable storage medium. The computer-readable storage medium stores a computer program (which may also be referred to as code or instructions). When the computer program is run on a processor, a communication apparatus is enabled to perform the method according to any possible implementation of the first aspect, or a communication apparatus is enabled to perform the method according to any implementation of the first aspect and the second aspect.

According to a tenth but not claimed aspect, a chip system is provided. The chip system may include a processor. The processor is coupled to a memory, and may be configured to perform the method according to either of the first aspect and the second aspect and any one of the possible implementations of the first aspect and the second aspect. Optionally, the chip system further includes the memory. The memory is configured to store a computer program (which may also be referred to as code or instructions). The processor is configured to: invoke the computer program from the memory, and run the computer program, so that a device on which the chip system is installed performs the method in either of the first aspect and the second aspect and any one of the possible implementations of the first aspect and the second aspect.

In a specific implementation process, the data transmission apparatus may be a chip, the input circuit may be an input pin, the output circuit may be an output pin, and the processing circuit may be a transistor, a gate circuit, a trigger, various logic circuits, and the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

## BRIEF DESCRIPTION OF DRAWINGS

FIG. 1 is a schematic diagram of a scenario to which an embodiment of this application is applicable;

FIG. 2a is a schematic flowchart of a data transmission method for an internet of vehicles according to an embodiment of this application;

FIG. 2b is a schematic diagram of a structure of a format according to an embodiment of this application;

FIG. 3a is a schematic diagram of a structure of a first preset format according to an embodiment of this application;

FIG. 3b is a schematic diagram of a structure of another first preset format according to an embodiment of this application;

FIG. 4a is a schematic diagram of a structure of a second preset format according to an embodiment of this application;

FIG. 4b is a schematic diagram of a structure of another second preset format according to an embodiment of this application;

FIG. 5 is a schematic diagram of a structure of a communication apparatus according to an embodiment of this application;

FIG. 6 is a schematic diagram of a structure of another communication apparatus according to an embodiment of this application; and

FIG. 7 is a schematic diagram of a structure of still another communication apparatus according to an embodiment of this application.

## DESCRIPTION OF EMBODIMENTS

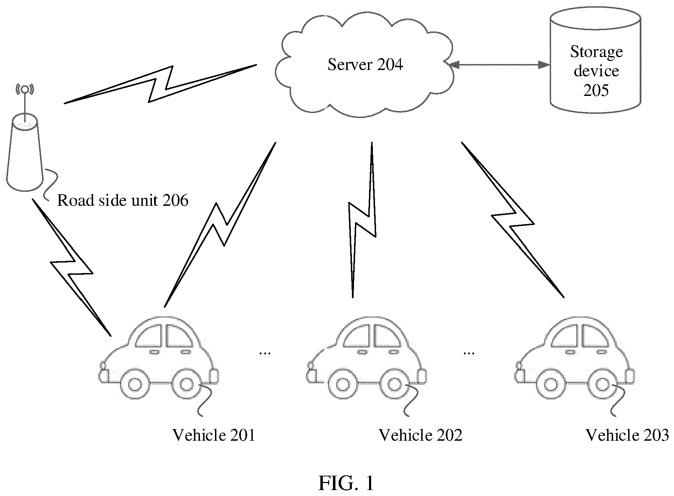

The following further describes embodiments of this application with reference to the accompanying drawings. FIG. 1 is a schematic diagram of an example of a scenario to which an embodiment of this application is applicable. The following first describes nouns or terms in embodiments of this application with reference to FIG. 1.

1) Terminal device

The terminal device in embodiments of this application may be a terminal device of a vehicle or a non-motor vehicle having a communication function, a portable device, a wearable device, a mobile phone (or referred to as a "cellular" phone), a portable, pocket-sized, or handheld terminal, a chip in these devices, or the like. The terminal device in this application may be a terminal device applied to an internet of vehicles, and the terminal device in this application may also be referred to as an internet of vehicles terminal device, an internet of vehicles terminal, an internet of vehicles communication apparatus, an in-vehicle terminal device, or the like.

In FIG. 1, an example in which the terminal device is a vehicle is used for illustration. FIG. 1 schematically shows three vehicles, namely, a vehicle 201, a vehicle 202, and a vehicle 203. A vehicle is a typical terminal device in the internet of vehicles. In the following embodiments of this application, the vehicle is used as an example for description. Any vehicle in embodiments of this application may be an intelligent vehicle or a non-intelligent vehicle. This is not limited in embodiments of this application. A person skilled in the art should understand that, in this application, an embodiment in which a vehicle is used as an example may alternatively be applied to another type of terminal device. The terminal device may specifically execute an internet of vehicles-related service procedure by using an internal function unit or apparatus of the terminal device. For example, when the terminal device is the vehicle, one or more of the following apparatuses in the vehicle may be configured to perform a method procedure related to the terminal device in embodiments of this application, for example, a telematics box (telematics box, T-Box), a domain controller (domain controller, DC), a multi-domain controller (multi-domain controller, MDC), an on board unit (on board unit, OBU), or an internet of vehicles chip.

In embodiments of this application, the vehicle may communicate with another object based on a vehicle-to-everything wireless communication technology (for example, vehicle to everything (V2X)). For example, communication between the vehicle and a cloud server may be implemented based on a vehicle-to-vehicle wireless communication technology (for example, vehicle to vehicle (V2V)). The vehicle may communicate with the another object based on wireless fidelity (for example, wireless fidelity (Wi-Fi)), a fifth generation (5th generation, 5G) mobile communication technology, or the like. For example, communication between the vehicle and another apparatus (for example, a road side unit 206 or a server 204) may be implemented based on 5G.

In embodiments of this application, the terminal device may be configured to collect ambient environment information. For example, the ambient environment information may be collected by using a sensor disposed on the terminal device. In embodiments of this application, the vehicle may include a data transmission apparatus. The data transmission apparatus may transmit, to a server or a road side unit, raw data obtained by using the sensor, so that the server or the road side unit performs a map update operation. The data transmission apparatus may alternatively process the raw data to obtain processed data, and transmit the processed data to the server or the road side unit, so that the server or the road side unit performs the map update operation. When the terminal device is a vehicle, the data transmission apparatus in the vehicle in embodiments of this application may be a component in the vehicle, the vehicle, a mobile phone, or the like. The data transmission apparatus may include a data transmission apparatus of a positioning system in the vehicle, a data transmission apparatus for intelligent driving, or any other device implementation having a computing capability.

2) Road side unit (road side unit, RSU) 206

As shown in FIG. 1, the application scenario may include the RSU 206. The RSU 206 may be configured to send a vehicle to everything (vehicle to everything, V2X) message to the terminal device in a communication mode like direct communication (such as PC5) or a dedicated short range communications (dedicated short range communications, DSRC) technology. The V2X message may carry dynamic information or other information that needs to be notified to the terminal device. A communication mode between the road side unit and the terminal device may also be referred to as vehicle to infrastructure (vehicle to infrastructure, V2I) communication. It should be noted that FIG. 1 shows only a communication path between the road side unit 206 and the vehicle 201 and the server 204. In actual application, the road side unit 206 may also have a communication path with another vehicle, for example, the vehicle 202 or the vehicle 203, which is not shown in the figure.

A specific deployment form of the road side unit is not specifically limited in this application. The road side unit may be a terminal device, a mobile or non-mobile terminal device, a server, a chip, or the like. The road side unit may be further configured to report, to an internet of vehicles server, dynamic information that occurs within a management range of the road side unit, for example, report the dynamic information by using a roadside information (roadside information, RSI) message.

A system architecture to which embodiments of this application are applicable may include the road side unit, or may not include the road side unit. This is not limited in embodiments of this application. In a possible implementation, the road side unit may perform focused sensing on some specified elements according to instructions delivered by the server, and report a sensing result. Alternatively, in another possible implementation, the road side unit may send instructions or deliver an updated map to the terminal device.

3) Server 204

As shown in FIG. 1, the application scenario may include the server 204. The server 204 may be an internet of vehicles platform or a server that manages the terminal device and/or the road side unit and provides a service for the terminal device and/or the road side unit, and includes an application server or a map cloud server that provides a service for a high definition map and a navigation map. In a possible implementation, the server 204 may be configured to perform functions such as updating and delivering the high definition map. A specific deployment form of the server is not limited in this application. For example, the server may be deployed on a cloud, or may be an independent computer device, a chip, or the like. When the V2X message needs to be sent to the terminal device, the server may send the V2X message to the road side unit, and the road side unit broadcasts the V2X message to the terminal device in a coverage area of the road side unit. Certainly, the server may directly send the V2X message to the terminal device.

4) Storage device 205

As shown in FIG. 1, the application scenario may include the storage device 205. The storage device 205 may be configured to store data, for example, may store a map.

5) Raw data, feature level data, and object level data

In embodiments of this application, a sensor is disposed on the terminal device (for example, a vehicle). The sensor is configured to collect an image near the vehicle. The sensor may include a camera, a laser radar, a millimeter-wave radar, an ultrasonic radar, or the like. In addition, one or more types of sensors may be disposed on each vehicle, and there may be one or more sensors of each type. The sensor may be mounted on a top of the vehicle (for example, may be disposed in a middle position on the top of the vehicle), a front end of the vehicle, or the like. Mounting positions and a quantity of sensors in each vehicle are not limited in embodiments of this application.

In the embodiments of this application, three types of data are defined: raw data, feature level (Feature Level) data, and object level data. In embodiments of this application, raw data collected by the sensor is processed, to obtain at least one of the feature level data or the object level data. The following describes the three types of data.

The raw data (Raw Data) is data collected by the sensor. For example, when the sensor is a laser radar, the raw data is laser radar point cloud data; or when the sensor is a camera, the raw data is pixel level (Pixel Level) data. The raw data may be represented as Pi (i=0, 1, 2, ..., N), where Pi is information about a point in an environment detected by the sensor, and N indicates a quantity of points in the environment detected by the sensor. For example, for a three-dimensional laser radar point cloud, Pi represents three-dimensional coordinate information of a point in the environment, and for a camera, Pi represents pixel information that is of a point in the environment and that is mapped to a two-dimensional image.

The feature level (Detection Level or Feature Level) data is data that is extracted from the raw data collected by the sensor and that can represent a feature of a detected object. The feature may be, for example, a key point of a shape contour of a detected object, or may be a local gradient feature obtained by using the three-dimensional laser point cloud or an image in the environment. The feature level data may be represented as Fi (i=0, 1, 2, ..., N), where Fi may be information about a feature of the detected object in an environment detected by the sensor, and N represents a quantity of features of the detected object.

The object level (Object Level) data is data that is extracted from the raw data or the feature level data and that can represent an attribute of the detected object. The object level data has a significant semantic feature, for example, a lane line, a traffic light, or a traffic sign. The object level data may be represented as Oi (i=0, 1, 2, ..., N), where Oi is information about an object in the environment detected by the sensor in the environment, and N indicates a quantity of objects detected by the sensor.

In embodiments of this application, conversion between data types may be implemented through feature extraction and object extraction. For example, feature extraction may be performed on the raw data to obtain the feature level data, object extraction may be performed on the raw data to obtain the object level data, and object extraction may be performed on the feature level data to obtain the object level data. These embodiments are not limited to methods for feature extraction and object extraction.

6) Data fusion overview

The data fusion in embodiments of this application includes: performing data fusion on a plurality of pieces of raw data, performing data fusion on a plurality of pieces of feature level data, and performing data fusion on a plurality of pieces of object level data.

The performing data fusion on the plurality of pieces of raw data means fusing the raw data of the sensor. Raw data of sensors of a same type (for example, all sensors are cameras) may be matched and fused. Alternatively, raw data of a plurality of types of sensors (for example, the sensor may include a camera and a millimeter-wave radar) may be matched and fused. In embodiments of this application, the raw data may be fused on a terminal device, or on a cloud server. When the raw data is fused on the cloud server, raw data reported by a plurality of sensors of a plurality of vehicles may be further fused in embodiments of this application.

Feature level data fusion means that each single sensor performs simple filtering and then feature extraction on the raw data. In embodiments of this application, the feature level data may be fused on a terminal device, or on a cloud server. When the feature level data is fused on the cloud server, feature level data of a plurality of vehicles may be further fused in embodiments of this application.

Object level data fusion means that each single sensor performs filtering, feature extraction, and then object matching and fusion on the raw data. Therefore, the object level data has a small data volume and clear object information.

As described above, in embodiments of this application, data of sensors of a same type may be fused, or data of a plurality of types of sensors may be fused. When data of different sensors is fused, advantages of a plurality of sensors may be considered. For example, object level data of the camera and the millimeter-wave radar is fused.

Location information of a first target point and location information of a second target point are obtained. The first target point represents a target object detected by a millimeter-wave radar sensor, and the second target point represents a target object detected by the camera. It is determined that a distance between the first target point and the second target point is less than a first preset threshold (a value of the first preset threshold may be set based on a size of the target object, for example, set to 1/5 to 1/2 of the size of the target object). In this case, it is considered that the first target point and the second target point are a same target. Further, a combination of a distance and a speed that are of the target and that are detected by the millimeter-wave radar, and a category and a horizontal location that are of the target and that are detected by the camera may be used as information about the object level data of the target. In this way, the object level data of the camera and the object level data of the millimeter-wave radar are fused, so that not only a target resolution capability and an angle resolution capability of the camera can be implemented, but also a ranging and speed measurement capability of the millimeter-wave radar can be implemented.

7) Example and confidence of data fusion

In embodiments of this application, an example in which the object level data is fused is used for description. In a possible implementation, data fusion may be performed on first object level data and second object level data according to a formula (1):

$$y=f(result_1, result_2)=\frac{w1}{w1+w2} result_1 + \frac{w2}{w1+w2} result_2 \qquad \text{Formula (1)}$$

In the formula (1):

y is a data fusion result;
$result_1$ is the first object level data;
$result_2$ is the second object level data; and
w1 is confidence corresponding to the first object level data, and may be specifically determined based on a parameter of a first sensor apparatus that obtains the first object level data, where w1 may be multi-dimensional data, that is, $w1=(w1_1, w1_2, ..., w1_i, ..., w1_{M1})$, M1 is a quantity of objects included in the first object level data, and $w1_i$ is confidence corresponding to an object i in the first object level data. i is a natural number less than M1.

w2 is confidence corresponding to the second object level data, and may be specifically determined based on a parameter of a second sensor apparatus that obtains the second object level data, where w2 may be multi-dimensional data, that is, $w2=(w2_1, w2_2, ..., w2_j, ..., w2_{M2})$, M2 is a quantity of objects included in the second object level data, and $w2_j$ is confidence corresponding to an object j in the second object level data. j is a natural number less than M2.

It may be understood that confidence of data may be divided more finely, so that different elements in the data correspond to different confidence. It is not difficult to understand that, a larger proportion of the confidence of the first object level data in a sum of the confidence of the first object level data and the confidence of the second object level data indicates a larger proportion of the first object level data in a fusion result. It may also be understood that, a larger value of confidence of a sensing apparatus indicates a larger proportion of sensing data obtained by the sensing apparatus through detection in the fusion result.

It should be noted that, the confidence may be determined based on one or more of a sensing apparatus parameter, a sensing distance of a target object, and a sensing angle of the target object. For example, $w1_i$ may be determined based on one or more of a sensing apparatus parameter of the first sensor apparatus, a sensing distance of the object i, and a sensing angle of the object i.

The sensing apparatus parameter is related to initial precision, a spatial mounting angle, and mounting coordinates of the sensing apparatus.

The sensing distance of the target object is a distance between the target object and the sensing apparatus in a sensing coordinate system.

The sensing angle of the target object is an angle formed between the target object and the sensing apparatus in the sensing coordinate system.

It should be noted that, when a sensor apparatus (for example, the first sensor apparatus or the second sensor apparatus) includes a plurality of sensors, confidence of the sensor apparatus may be obtained in a manner of weighting or averaging confidence of the plurality of sensors included in the sensor apparatus.

It is not difficult to understand that, higher precision of the sensing apparatus parameter indicates a larger value of the confidence, and lower precision of the sensing apparatus parameter indicates a smaller value of the confidence. A smaller sensing distance indicates a larger value of the confidence, and a larger sensing distance indicates a smaller value of the confidence. A smaller sensing angle indicates a larger value of the confidence, and a larger sensing angle indicates a smaller value of the confidence.

The confidence (confidence) can be used to measure a trustworthiness degree of an identification result. Currently, there are a plurality of confidence calculation methods in the industry, including at least the following several methods:
a posterior probability directly obtained based on a Bayesian classification method, an estimation of a posterior probability obtained based on a neural network or another method, a randomness measurement value obtained based on an algorithmic randomness theory, a membership degree obtained based on fuzzy mathematics, accuracy obtained through statistics collection in a plurality of test experiments, and the like.

It should be noted that the confidence calculation method in embodiments of this application is not limited to the foregoing several methods. Any calculation method that can be used to determine the confidence may be applied to embodiments of this application, and falls within the protection scope of embodiments of this application.

In the foregoing content, an example in which the object level data is fused is used for description. A solution for fusing the raw data and the feature level data is similar to that in the foregoing content. Details are not described again. It should be noted that the foregoing example is merely a possible data fusion solution. Embodiments of this application is applicable to a plurality of data fusion solutions, and is not limited thereto.

8) Map element

The map elements are elements in the map, including but not limited to a road, a lane line, a sign, a ground sign, a signal light, a drivable area line, and the like. The road may include a guardrail, a road edge, and the like. The sign includes various types of signs such as a road sign, an indicative sign, and a height-limit sign. The ground sign includes a traffic distribution sign, an entrance/exit sign, a speed-limit sign, a time-limit sign, and the like.

Type information of the map elements is discussed in embodiments of this application, which means the map elements may be classified into different types of map elements each identified by a type, and the type information mentioned in this specification may be the type identification. A classification rule of the map elements is not limited. For example, a road identification may be classified as one type, or the ground sign identification may be classified as one type.

In a possible implementation, embodiments of this application are applicable to a high definition map. Generally speaking, the high definition map is an electronic map with higher precision and more data dimensions, and has more map elements. For example, the higher precision is embodied as follows: Element information included in the map is accurate to a centimeter level.

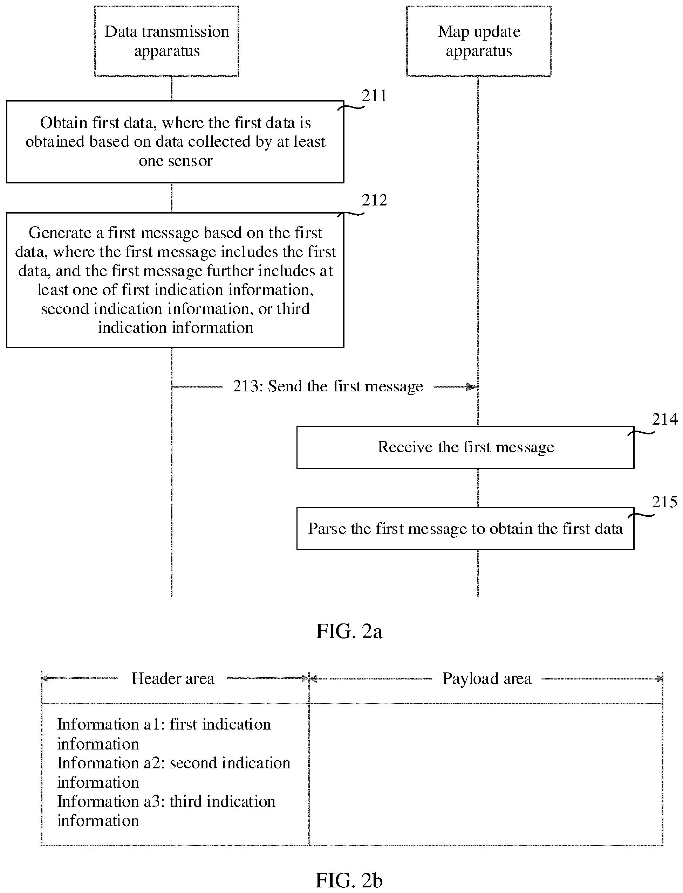

Based on the foregoing content, FIG. 2a is a schematic flowchart of an example of a data transmission method for an internet of vehicles according to an embodiment of this application. The method may be performed by a terminal device and a server. In a possible implementation, the method may be performed by a data transmission apparatus on the terminal device and a map update apparatus on the server. As shown in FIG. 2a, the method includes the following steps.

Step 211: The data transmission apparatus obtains first data, where the first data is obtained based on data collected by at least one sensor on at least one vehicle.

Step 212: The data transmission apparatus generates a first message based on the first data. The first message includes the first data. The first message further includes at least one of first indication information, second indication information, or third indication information.

Step 213: The data transmission apparatus sends the first message.

After step 213, in a possible implementation, the method may further include the following step 214 and step 215. The following steps may be performed by the map update apparatus on the server.

Step 214: The map update apparatus receives the first message.

Step 215: The map update apparatus parses the first message to obtain the first data.

In a possible implementation, the map update apparatus may update a map based on the first data.

In step 212, the first indication information in this embodiment of this application indicates a data type of the first data. The data type of the first data includes at least one of raw data, feature level data, or object level data. The raw data is data collected by the sensor, the feature level data is data that is extracted from the raw data collected by the sensor and that can represent a feature of a detected object, and the object level data is data that is extracted from the raw data or the feature level data and that can represent an attribute of the detected object. For related descriptions of the three data types, refer to the foregoing content. Details are not described herein again.

When the first message includes the first indication information, a terminal device may be supported in reporting data of one or more data types. In this way, a cloud server may receive data of more data types, so that reliability of data fusion can be improved. In addition, based on the first indication information, the cloud server may decode the first message by using an algorithm corresponding to the data type of the first data, so that a decoding success rate can be increased

The second indication information in this embodiment of this application indicates a format of the first message. Related content about the format of the first message is described in detail subsequently, and is not described herein.

In step 212, the third indication information in this embodiment of this application indicates a type of the at least one sensor used to obtain the first data. In other words, the first data may be obtained based on data collected by a single sensor, or may be obtained based on data collected by a plurality of sensors. In this embodiment of this application, the sensor may include a camera, a camera lens, a laser radar, a millimeter-wave radar, an ultrasonic radar, and the like. In this embodiment of this application, the first message may carry the third indication information indicating the type of the sensor. Therefore, in this embodiment of this application, the terminal device reports data based on a dimension of a sensor type. In addition, because the first message carries the third indication information, the cloud server (for example, a server on a cloud) may decode the first data based on the type of the sensor that obtains the first data, so that a success rate of data decoding can be increased.

In this embodiment of this application, Table 1 shows an example of some combination forms of the data type and the sensor type of the data reported by the terminal device that can be supported in this embodiment of this application. The following provides descriptions with reference to Table 1.

A person skilled in the art may learn that Table 1 merely shows several combination forms as an example, and has no limitation meaning. For example, Table 1 shows only the raw data, the feature level data, the object level data, and the feature level data and object level data in a dimension of the data type. In an actual application, the terminal device may be further supported in reporting data of another data type, for example, sensor self-check data. The sensor self-check data may include data related to sensor health and performance. Impact factors of sensor performance damage include damage to an observation field (such as rain, fog, snow, and dust) and damage to a surface of the sensor (such as dirt, dust, shrinkage, and scratches). Sensor health information may include operations, diagnosis, defects, cleaning, and location calibration inside the sensor.

**Table 1 Combination table of a sensor type and a data type of data reported by a supported terminal device**

| Data type<br>Sensor type | Raw data | Feature level data | Object level data | Feature level data and object level data |
|---|---|---|---|---|
| Camera | Supported | Supported | Supported | Supported |
| Laser radar | Supported | Supported | Supported | Supported |
| Millimeter-wave radar | Supported | Supported | Supported | Supported |
| Sensor fusion | | Supported | Supported | Supported |
| Camera + laser radar | Supported | Supported | Supported | Supported |
| Camera + millimeter-wave radar | Supported | Supported | Supported | Supported |
| Camera + sensor fusion | | Supported | Supported | Supported |
| Laser radar + sensor fusion | | Supported | Supported | Supported |
| Millimeter-wave radar + sensor fusion | | Supported | Supported | Supported |

In the dimension of the sensor type, in this embodiment of this application, the terminal device may be supported in reporting data of a single sensor type, may be supported in reporting a single data type, or may be supported in reporting a plurality of data types.

As shown in a second row in Table 1, the terminal device may be supported in reporting data corresponding to the camera. For example, the terminal device may be supported in reporting raw data collected by the camera. For another example, the terminal device may be supported in reporting feature level data corresponding to the camera. The feature level data corresponding to the camera may be obtained based on the raw data collected by the camera. For another example, the terminal device may be supported in reporting object level data corresponding to the camera. The object level data corresponding to the camera may be obtained based on the raw data collected by the camera. For another example, the terminal device may be supported in reporting the feature level data corresponding to the camera, and the terminal device may also be supported in reporting the object level data corresponding to the camera.

In the dimension of the sensor type, in this embodiment of this application, the terminal device may be further supported in reporting data of a plurality of sensor types, may be supported in reporting a single data type, or may be supported in reporting a plurality of data types.

As shown in a sixth row of Table 1, the terminal device may be supported in reporting the data corresponding to the camera, and the terminal device may also be supported in reporting data corresponding to the laser radar. It should be noted that, meaning expressed in the sixth row of Table 1 is that the terminal device may be supported in reporting data of two sensor types, namely, the camera and the laser radar. Further, reporting of one of the raw data, the feature level data, and the object level data of the camera may be supported, or reporting of the feature level data and object level data of the camera may be supported. Alternatively, reporting of one of the raw data, the feature level data, and the object level data of the laser radar may be supported, or reporting of the feature level data and object level data of the laser radar may be supported.

In this embodiment of this application, reporting of data obtained through fusion of data of the plurality of sensors may be further supported, reporting of a single data type may be supported, or reporting of a plurality of data types may be supported. In this embodiment of this application, sensor fusion may be fusing data of at least two sensors on the terminal device. In this embodiment of this application, the terminal device may perform data fusion processing. Data fusion of the feature level data may be used to generate or update a feature positioning layer, or used to enhance and assist feature positioning. Data fusion of the raw data or the object level data may be used to generate or update a vector base map. In this embodiment of this application, a data fusion algorithm is not limited. For example, data fusion processing may be performed by using at least one of a multi-line laser radar data processing algorithm, a Kalman filtering algorithm, and a data association algorithm, to obtain fused data.

As shown in a fifth row of Table 1, the terminal device may be supported in reporting data obtained through fusion of a plurality of pieces of feature level data corresponding to the plurality of sensors. For another example, the terminal device may be supported in reporting data obtained through fusion of a plurality of pieces of object level data corresponding to the plurality of sensors. For another example, reporting of the data obtained through fusion of a plurality of pieces of feature level data corresponding to the plurality of sensors may be supported, and reporting of the data obtained through fusion of a plurality of pieces of object level data corresponding to the plurality of sensors may also be supported.

In this embodiment of this application, the terminal device may be further supported in reporting the data obtained through fusion of data of the plurality of sensors, and supported in reporting data of one or more sensors. Reporting of a single data type may be reported, or reporting of a plurality of data types may be reported.

As shown in an eighth row of Table 1, the terminal device may be supported in reporting the data corresponding to the camera (for example, may be supported in reporting the raw data collected by the camera, or may be supported in reporting the feature level data corresponding to the camera, or may be supported in reporting the object level data corresponding to the camera, or may be supported in reporting the feature level data and object level data corresponding to the camera), and the terminal device may also be supported in reporting data corresponding to sensor fusion (for example, may be supported in reporting the data obtained through fusion of a plurality of pieces of feature level data corresponding to the plurality of sensors, or may be supported in reporting the data obtained through fusion of a plurality of pieces of object level data corresponding to the plurality of sensors, or may be supported in reporting the data obtained through fusion of a plurality of pieces of feature level data and data obtained through fusion of a plurality of pieces of object level data corresponding to the plurality of sensors).

With reference to Table 1, some examples of the first message in step 212 are described. For example, when the first data is data obtained through fusion of the feature level data of the camera and the feature level data of the laser radar, the first message may include the first indication information, and the first indication information indicates a data type, namely, the feature level data. The first message may further include the third indication information, and the third indication information indicates two sensor types, namely, the camera and the laser radar. For another example, when the first data is the object level data of the camera and the object level data corresponding to the sensor fusion, the first message may include the first indication information, and the first indication information indicates a data type, namely, the feature level data. The first message may further include the third indication information, and the third indication information indicates two sensor types, namely, the camera and the laser radar.

FIG. 2b is a schematic diagram of a structure of a format of a first message according to an embodiment of this application. As shown in FIG. 2b, the format of the first message includes a header area and a payload area.

As shown in FIG. 2b, the header area of the first message may carry at least one of the first indication information, the third indication information, or the second indication information.

As shown in FIG. 2b, when the first message includes the first indication information, the first indication information may be carried in the header area. In this way, after decoding the header area, the cloud server may perform decoding by using a corresponding algorithm based on the data type indicated by the first indication information, so that a decoding success rate can be increased.

As shown in FIG. 2b, when the first message includes the third indication information, the third indication information may be carried in the header area. In this way, after decoding the header area, the cloud server may perform decoding by using a corresponding algorithm based on the sensor type indicated by the third indication information, so that a decoding success rate can be increased.

In this embodiment of this application, several preset formats may be further provided. Further, the second indication information may be carried in the header area, and the second indication information may indicate which preset format is used for the first message. Therefore, after decoding the header area, the cloud server can perform decoding based on the preset format used for the first message, so that a decoding success rate can be increased. In a possible implementation, the second indication information may be information in the format of the first message. In another possible implementation, the second indication information may be information that can indicate the format of the first message. For example, several specific values may be preset. There is a correspondence between a feature value and the preset format. The second indication information may be a specific value. In this way, the corresponding format of the first message may be reflected by using the specific value carried in the first message.

In this embodiment of this application, for differentiation, the several preset formats are respectively referred to as a first preset format, a second preset format, and a third preset format in the following content. Each of the several preset formats (any one of the first preset format, the second preset format, and the third preset format) in this embodiment of this application may include a header area and a payload area. The header area may carry at least one of the first indication information, the second indication information, or the third indication information as mentioned above.

When the first data is the raw data (which may be raw data collected by a single sensor, or may be data obtained through fusion of raw data collected by a plurality of sensors), the format of the first message may be the third preset format, and the header area of the first message may carry at least one of the first indication information, the second indication information, or the third indication information. The payload area of the first message may carry the first data. In this case, the first data may be one or more frames of image data.

When the data type of the first data is the feature level data or the object level data (the first data may be obtained based on the raw data collected by a single sensor or a plurality of sensors), the first preset format may be used, or the second preset format may be used. Optionally, whether to use the first preset format or the second preset format may be selected based on whether to perform comparison with the map.

When the format of the first message is the first preset format or the second preset format, the payload area of the first message may be divided into one or more element areas, and one element area may carry information about one element. When the first data is the feature level data, information about an element carried in the payload area may be information about a feature. When the first data is the object level data (or data obtained through fusion of the feature level data and the object level data), information about an element carried in the payload area may be information about an object. For the information about the feature and the information about the object, refer to the foregoing example. Details are not described herein again.

The payload area in this embodiment of this application may also be understood as an area other than the header area in an area used to carry valid data. In this embodiment of this application, the payload area may also have another name. This is not limited in embodiments of this application. In this embodiment of this application, the element area may also have another name, for example, a data entity area. This is not limited in embodiments of this application.

In a possible implementation, after obtaining the data (the at least one of the raw data, the feature level data, or the object level data) by using the sensor, the terminal device does not compare the data with data on a map (or the terminal device does not make a decision on a map element change), but directly reports the data. In this case, the data may be reported in the first preset format. When the first message is reported in the first preset format, information about an element carried in the first message may be referred to as the information about the target element. In a possible implementation, when the format of the first message is the first preset format, the first data includes the information about the target element collected by using the at least one sensor. The information about the target element carried in the first message may be information about a feature in the feature level data, or may be information about an object in the object level data.

In another possible implementation, after obtaining the data by using the sensor, the terminal device compares the data with the data on the map (or the terminal device makes a decision on the map element change), to determine a changed element, and may report information about the changed element. In this case, the second preset format may be used. When the first message is reported in the second preset format, the information about the element that can be carried in the first message may be referred to as the information about the map element. Further, in this possible implementation, the information about the map element included in the first data may include: obtaining information about a changed map element that is in the map elements collected by the sensor and that is of the first data. In still another possible implementation, when the format of the first message is the second preset format, the first data includes the information about the map element collected by using the at least one sensor. In other words, the information about the changed map element may be reported, or information about an unchanged map element may be reported.

In this embodiment of this application, two reporting architectures that are performed to determine whether the terminal device makes a map change decision may be referred to as two modes. For example, a mode of a scheme in which the terminal device does not make a decision on an element change (that is, the first message is reported in the first preset format) may be referred to as a 23150 mode. A mode of a scheme in which the terminal device makes a decision on the element change (that is, the first message is reported in the second preset format) may be referred to as a new mode.

In this embodiment of this application, information about an element that is sent without comparison with the map is referred to as information about a target element. The information about the element that is sent in a case of comparison with the map is referred to as the information about the map element. Further, when the format of the first message is the second preset format, the first data further includes map information corresponding to the map element collected by the at least one sensor. For example, the first data may carry a map tile identification corresponding to the map element.

In a possible implementation, in the information that is about the map element and that is reported in the first data, a change type of a changed map element may include one of the following content:

adding a map element: a map element that is in the map elements collected by the at least one sensor and that has no corresponding map element in a current map; and

moving a map element: a map element that is in the map elements collected by the at least one sensor and that moves relative to a location of a corresponding map element in a current map.

When the change type of the map element is adding (adding a map element), the information about the map element appears only in the data obtained based on the sensor, and the map element does not appear at the location on the map.

When the change type of the map element is moving (moving a map element), the current location of the map element may not match the location on the map. In a possible implementation, the terminal device may set a threshold, for example, set a threshold of a moving distance of the map element. When it is determined that the map element moves, and the moving distance is greater than the threshold of the moving distance of the map element, it may be determined that the map element is the changed map element.

In a possible implementation, the information about the changed map element may be relative change information of the map element or absolute characterization information of the map element. For example, the map element is a lane line, and the lane line may move. In this case, information about the lane line may be carried in a payload area of the first message, for example, absolute characterization information of the lane line may be carried, for example, an absolute location (for example, location information in an earth coordinate system) of the lane line. Alternatively, relative change information of the lane line may be carried in the payload area, for example, a relative change amount of a changed lane line may be carried, for example, a direction of movement and a movement change amount relative to an original location.

In an actual operation, a change type "deletion" may also occur on the map element. When the change type of the map element is deletion, the information about the map element appears only on the map, but the map element does not appear in the data obtained based on the sensor. In this case, the terminal device does not collect related information about the map element by using the sensor, and therefore the information of the map element may not need to be reported. The cloud server may further compare the received data with the map to determine whether the map element on the map is deleted, and when determining that a map element on the map is deleted, delete the map element from the map.

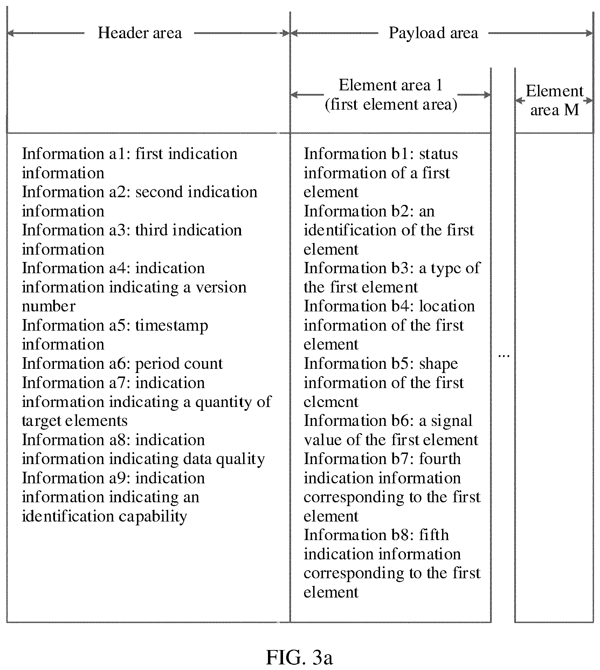

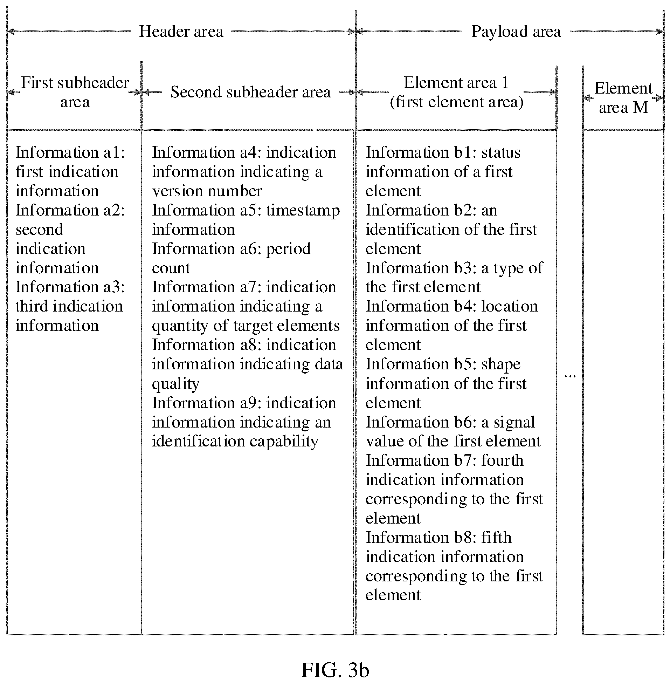

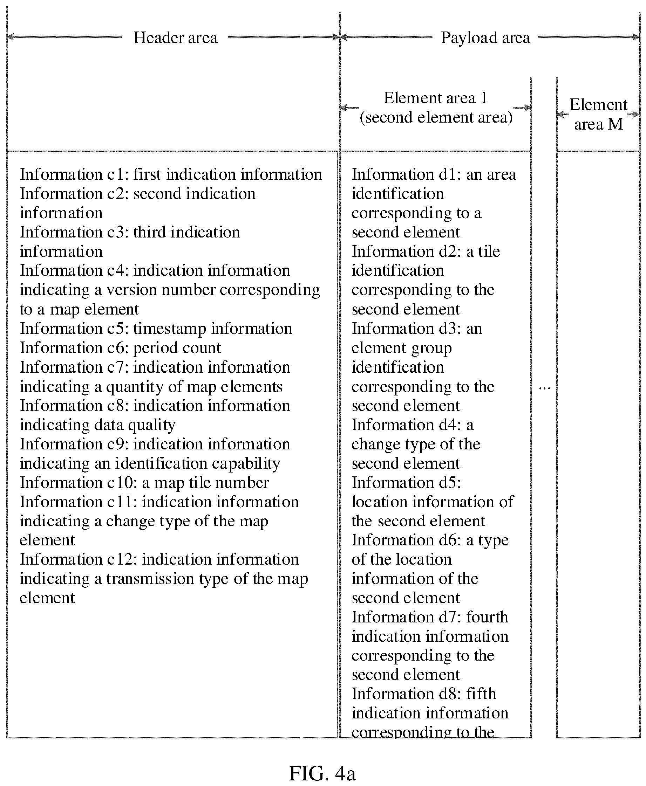

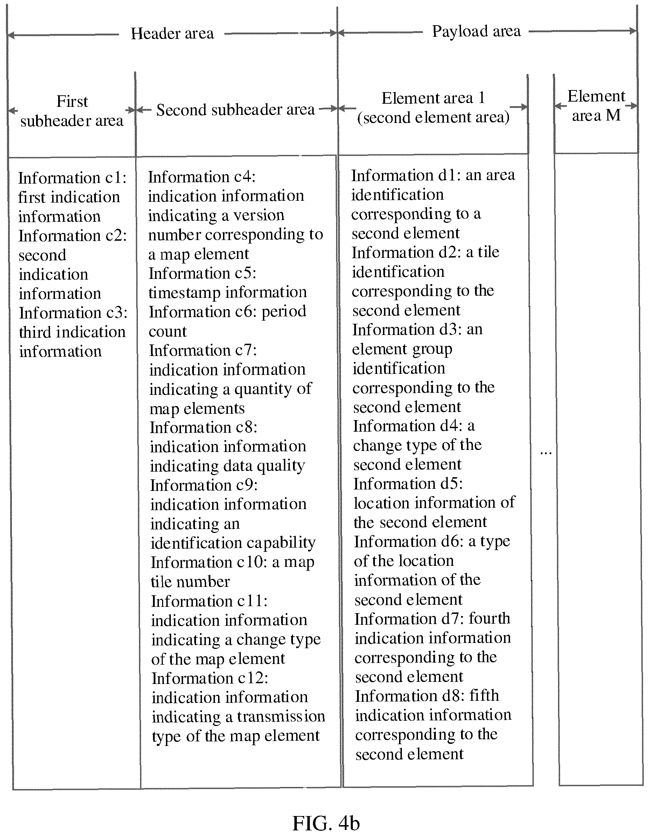

The following describes the first preset format with reference to FIG. 3a and FIG. 3b, and describes the second preset format with reference to FIG. 4a and FIG. 4b.

FIG. 3a is a schematic diagram of a structure of an example of a first preset format to which an embodiment of this application is applicable. As shown in FIG. 3a, the first preset format includes the header area and the payload area.

As shown in FIG. 3a, the header area may carry one or more of information a1 to information a9 in the following content. The following information a1 to a9 merely show examples of several types of information that may be carried in the first message. During specific application, other content such as a color model may be further carried in the header area. This is not specifically limited in embodiments of this application.

The information a1 is the first indication information. The first indication information may indicate the data type.

In this embodiment of this application, the data type may also be referred to as a data interface type, which may be understood as a type of data transmitted from a data interface.

For example, when the first data is the feature level data, the first indication information is information that can indicate that the data type of the first data is the feature level data. For another example, when the first data is the raw data, the first indication information is information that can indicate that the data type of the first data is the raw data. For another example, if the first data is the data obtained through fusion of the feature level data and the object level data, the first indication information is indication information that can indicate that the data type of the first data is the feature level data and the object level data. In a possible implementation, for a specific value of the first indication information, refer to content of candidate values of the data types shown in the first row in Table 1.

In a possible implementation, the first indication information may be the data type of the first data. In another possible implementation, the first indication information may be information that can indicate the data type of the first data. For example, a correspondence between a specific value and the data type may be preset, and a corresponding data type is reflected by carrying the specific value.

For related content of the first indication information and the data type in this embodiment of this application, refer to the foregoing content. Details are not described herein again.

The information a2 is the second indication information. The second indication information may indicate the format of the first message. The format of the first message includes one of the first preset format, the second preset format, or the third preset format.

In an example in FIG. 3a, the first message is in the first preset format. In this case, the second indication information should be information that can indicate the first preset format.

The information a3 is the third indication information. The third indication information may indicate a type of one or more sensors.

In this embodiment of this application, the third indication information carried in the first message may indicate a type of at least one sensor that is related to the data and that is used to obtain the first data. In a possible implementation, the third indication information carried in the first message may indicate types of all sensors that are used to collect raw data of the first data.

For example, the first data is obtained through fusion of the feature level data of the camera and the object level data of the laser radar. In this case, the third indication information in the first message is indication information that can indicate the camera and the laser radar. For another example, the first data is obtained through fusion of the feature level data of the camera and the object level data of the camera. In this case, the third indication information in the first message is indication information that can indicate the camera. In a possible implementation, for a specific value of the third indication information, refer to content of candidate values of the sensor types shown in a first column in Table 1.

In a possible implementation, the third indication information may be the sensor type. In another possible implementation, the third indication information may be information that can indicate the sensor type. For example, a correspondence between a specific value and the sensor type may be preset, and a corresponding sensor type is reflected by carrying the specific value.

For related content of the third indication information and the sensor type in this embodiment of this application, refer to the foregoing content. Details are not described herein again.

The information a4 is indication information indicating a version number.

The version number may be a map version number, for example, may be a version number of a latest map.

The information a5 is timestamp information.

The first data is obtained based on the raw data collected by the at least one sensor. The timestamp information may be time at which the sensor collects the raw data, or may be time at which the first data is obtained by performing processing based on the raw data collected by the sensor. The timestamp information may display validity of the first data. If the timestamp information indicates that the time at which the raw data is collected (or the time at which the first data is obtained) is far away from current time, it may be considered that the first data has low validity and may be invalid. If the time stamp information indicates that the time at which the raw data is collected (or the time at which the first data is obtained) is close to current time, it may be considered that the first data has high validity and a low probability of invalidity.

The information a6 is period count.

In a possible implementation, the period count may also be referred to as a data packet sequence number. In a possible implementation, the terminal device may periodically report data, and the period count may show a period to which data reported for the current time belongs. In another possible implementation, the period count may indicate a sequence number of the data reported for the current time in one period.

The information a7 is indication information indicating a quantity of target elements.

When the first message uses the first preset format, information about an element that can be carried in the payload area may be referred to as the information about the target element, and the information indicating the quantity of target elements may be carried in the header area. When the data type of the first data is the feature level data, the quantity of target elements may be a quantity of features carried in the payload area of the first message. When the data type of the first data is the object level data, the quantity of target elements may be a quantity of objects carried in the payload area of the first message.

The indication information indicating the quantity of target elements may be the quantity of target elements, or may be other information indicating the quantity of target elements.

The information a8 is indication information indicating data quality.

The raw data collected by the terminal device by using the sensor, the feature level data or the object level data obtained after the terminal device processes the raw data subsequently, the fused data, or the like may correspond to data quality. The data quality may be used as a confidence parameter of the first message, and is used to assist the cloud server in determining confidence of the first message.

In a possible implementation, the data quality may be classified into levels, and the terminal device may select a corresponding level from preset data quality classification levels.

The indication information indicating the data quality may be a data quality level indication, or may be other information indicating the data quality.

The information a9 is indication information indicating an identification capability.

The terminal device collects the raw data by using the at least one sensor, and obtains the first data based on the raw data. Each of the at least one sensor corresponds to information about one identification capability when collecting this raw data. In a possible implementation, the identification capability may be classified into levels, and the terminal device selects an identification capability corresponding to a current detection result (that is, data collected this time).

As shown in FIG. 3a, the payload area in the first preset format may include one or more element areas. In another possible implementation, the payload area includes M element areas, and M is a positive integer. One of the M element areas may carry information about one element. The element may be the foregoing target element or map element. The M element areas may be used to carry information about M elements, and the M element areas may be in a one-to-one correspondence with the M elements. When the first message is in the first preset format, one element in the M elements may be the target element.

The M element areas shown in FIG. 3a are respectively an element area 1, ..., and an element area M. In this embodiment of this application, an element area of the payload area is used as an example for description. For another element area, refer to content of the element area. Details are not described again. For ease of subsequent reference, the element area is referred to as a first element area. The first element area may be one of the element area 1 to the element area M. For ease of description, an example in which the element area 1 is the first element area is used for description. One element area is used to carry related information about one element. For ease of reference in subsequent content, an element corresponding to information carried in the first element area is referred to as a first element.

When the format of the first message is the first format, the first element may be referred to as the target element, and the first element may be a feature or a target. As shown in FIG. 3a, the payload area may carry one or more of information b1 to information b8 in the following content. The following information b1 to b8 merely show examples of several types of information that may be carried in the first message. During specific application, other content may be further carried in the payload area. This is not specifically limited in embodiments of this application.

The information b1 is status information of the first element.

The status information of the first element may be measurement status information of the first element obtained when the sensor measures the first element, for example, a status value or a quality status of the first element that is measured.

The information b2 is an identification (Identification, ID) of the first element.

The identification of the first element may be generated by the terminal device for the first element, or may be an identification of the first element. For example, if the first element is a street lamp, the identification of the first element may be a number of the street lamp.

The information b3 is a type of the first element.

The type of the first element may be, for example, a traffic light, a lamp pole, a column, or a fence.

The information b4 is location information of the first element.

The location information of the first element in the information b4 may be absolute location information, for example, may be location information in the earth coordinate system. The location information of the first element may alternatively be relative location information, and may be location information relative to a reference object. For example, if the first element moves, the location information of the first element may be a location change amount relative to the location information before the movement.

The information b5 is shape information of the first element.

The shape information of the first element may include information about a length, a width, a height, and the like of the first element, and may further include content such as an obstructed contour and length, width, and height statistics.

The information b6 is a signal value of the first element.

The signal value of the first element may be an information content value corresponding to the target element, for example, an arrow shape, speed-limit information, warnings, or prompt semantic information indicated on a road sign, or a digital display value in a traffic light head.

For example, common traffic signs can be classified into the following types.

    a) Regulations sign: a sign that prohibits, restricts, or indicates traffic behaviors of vehicles and pedestrians.
    b) Warning sign: a sign that warns vehicles and pedestrians of road traffic.
    c) Guide sign: a sign that indicates information about a road direction, location, and distance.
    d) Tourist area sign: a sign that provides a direction and distance of a tourist attraction.
    e) Operation area sign: a sign that informs passing through a road operation area.
    f) Auxiliary sign: a sign that is disposed under the regulations sign and the warning sign to provide auxiliary description.
    g) Featured sign: a sign that informs off-road facilities, safety publicity information, and other information.

The information b7 is fourth indication information corresponding to the first element. The fourth indication information indicates at least one of environment information during collection of the first element by the sensor or obstructed information of the first element.

In a possible implementation, the fourth indication information may indicate confidence of the information about the first element carried in the first message, and the confidence may also be understood as a trusted degree. In other words, the cloud server may use the fourth indication information as a parameter considering the confidence of the information about the first element in the first message. The cloud server may perform conversion and correction on the confidence of the information about the first element in the first message based on the fourth indication information, so that reliability of data fusion can be improved, and accuracy of an updated map can be improved. In this embodiment of this application, the fourth indication information may also be referred to as association information. This is not limited in embodiments of this application. In a possible implementation, the fourth indication information may further indicate other information, for example, status information of the first element when the first element is detected.

In a possible implementation, higher confidence of the information about the first element indicates a larger degree of impact of the information about the first element on updated information about the first element in the map. On the contrary, lower confidence of the information about the first element indicates a smaller degree of impact of the information about the first element on the updated information about the first element in the map.

In a possible implementation, the environment information during collection of data of the first element includes at least one of the following content: a lighting parameter, visibility, reflectivity information, a horizontal distance, a longitudinal distance, and a weather parameter. Table 2 is a schematic table of an example of a logical signal structure corresponding to possible environment information. As shown in Table 2, a first column shows parameters that may be included in the environment information, and a second column displays a requirement level of a corresponding parameter. For example, if a requirement level of "visibility information" is identified as "optional" in Table 2, it indicates that the first message may carry "visibility information" of the first element, or may not carry "visibility information". This parameter is optional content, and may be determined by the terminal device, or may be delivered to the terminal device after being determined by the cloud server or the road side unit, or may be determined after the terminal device negotiates with another apparatus (for example, the cloud server or the road side unit).

**Table 2 Schematic table of a logical signal structure corresponding to environment information**

| Parameters included in the environment information | Requirement level |
|---|---|
| Lighting parameter | Optional |
| Visibility information | Optional |
| Reflectivity | Optional |
| Horizontal distance | Optional |
| Longitudinal distance | Optional |
| Weather parameter | Optional |

In a possible implementation, the obstructed information of the first element includes at least one of the following content: an obstructed degree of the first element, visibility of the first element, or an obstructed degree of a connection line between the first element and a vehicle. Table 3 is a schematic table of an example of a logical signal structure corresponding to possible obstructed information. As shown in Table 3, a first column shows parameters that may be included in the obstructed information, and a second column displays a requirement level of a corresponding parameter. For example, if a requirement level of "an obstructed degree of the first element" is identified as "optional" in Table 3, it indicates that the first message may carry information about "an obstructed degree of the first element", may not carry information about "an obstructed degree of the first element". This parameter is optional content, and may be determined by the terminal device, or may be delivered to the terminal device after being determined by the cloud server or the road side unit, or may be determined after the terminal device negotiates with another apparatus (for example, the cloud server or the road side unit).

**Table 3 Schematic table of a logical signal structure corresponding to obstructed information**

| Parameters included in the obstructed information | Requirement level |
|---|---|
| Obstructed degree of the first element | Optional |
| Visibility of the first element | Optional |
| Obstructed degree of a connection line between the first element and a vehicle | Optional |

The information b8 is fifth indication information corresponding to the first element. The fifth indication information indicates a trustworthiness degree of the information about the first element.

In a possible implementation, the fifth indication information may include one or more of the following content: an existence probability of the first element, the confidence of the information about the first element, an error of the information about the first element, and the like.

One or more of the existence probability of the first element, the confidence of the information about the first element, and the error of the information about the first element may be determined by the terminal device based on one or more of the following content:

a sensor status, a detection time point, quality of detection information, and ambient environment information, including weather, during detection.

FIG. 3b is a schematic diagram of a structure of an example of another possible first preset format. As shown in FIG. 3b, different from the first preset format shown in FIG. 3a, the first preset format shown in FIG. 3b includes a first subheader area and a second subheader area. Content in the payload area in FIG. 3b is the same as that in the payload area in FIG. 3a. Details are not described again.

In a possible implementation, data carried in the first subheader area is used to parse data carried in the second subheader area. In other words, the cloud server first parses content of the first subheader area, and then parses content of the second subheader area based on the parsed content.

The content in the header area in FIG. 3a may be carried in the first subheader area or the second subheader area in FIG. 3b. In a possible implementation, when the header area carries the first indication information, the first indication information may be carried in the first subheader area. When the header area carries the third indication information, the third indication information may be carried in the first subheader area. When the header area carries the second indication information, the second indication information may be carried in the first subheader area. Information other than the first indication information, the second indication information, and the third indication information in the header area in FIG. 3a may be carried in the second subheader area.

FIG. 4a is a schematic diagram of a structure of an example of a second preset format to which an embodiment of this application is applicable. As shown in FIG. 4a, the second preset format includes the header area and the payload area.

As shown in FIG. 4a, the header area may carry one or more of information c1 to information c13 in the following content. The following information c1 to c13 merely show examples of several types of information that may be carried in the first message. In a specific application, other content may be further carried in the header area. This is not specifically limited in embodiments of this application.

The information c1 is the first indication information. The first indication information may indicate the data type.

For content of the information c1, refer to the content of the information a1. Details are not described herein again.

The information c2 is the second indication information. The second indication information may indicate the format of the first message. The format of the first message includes one of the first preset format, the second preset format, or the third preset format.

The information c3 is the third indication information. The third indication information may indicate a type of one or more sensors.

For content of the information c3, refer to the content of the information a3. Details are not described herein again.

In the information c3, when the first message is in the second preset format, the second indication information in the first message may be information that can indicate the second preset format.

For other content of the information c3, refer to the descriptions of the information a3. Details are not described herein again.

The information c4 is indication information indicating a version number corresponding to the map element.

The version number may be a map version number. When the data is reported in the second preset format, the terminal device compares the data collected by using the sensor with the data on the map, to obtain the first data. Therefore, the indication information indicating the version number in the information c4 may be information that can indicate a version number of the map used for comparison.

The information c5 is timestamp information.

For content of the information c5, refer to the content of the information a5. Details are not described herein again.

The information c6 is period count.

For content of the information c6, refer to the content of the information a6. Details are not described herein again.

The information c7 is indication information indicating a quantity of map elements.

When the first message uses the second preset format, an element carried in the payload area is referred to as the map element, information about the map element is carried in the payload area, and information indicating the quantity of map elements may be carried in the header area. The quantity of map elements may be a quantity of map elements in the information about the map element carried in the payload area in the first message.

The indication information indicating the quantity of map elements may be the quantity of map elements, or may be other information indicating the quantity of map elements.

The information c8 is indication information indicating data quality.

For content of the information c8, refer to the content of the information a8. Details are not described herein again.

The information c9 is indication information indicating an identification capability.

For content of the information c9, refer to the content of the information a9. Details are not described herein again.

The information c10 is a map tile number.

The information c11 is indication information indicating a change type of the map element.

In a possible implementation, the change type (for example, the change type may be the foregoing moving or adding) of the map element carried in the payload area of the first message is determined through comparison with the data on the map, and the information c11 may indicate the change type of the map element carried in the payload area of the first message, to assist the cloud server in updating the map.

The information c12 is indication information indicating a transmission type of the map element information.

The transmission type of the map element information may be an information transmission manner used for actual transmission, for example, group-based transmission, type-based transmission, or area-based transmission. A plurality of pieces of change information may be transmitted in the following manners:

group-based transmission, where change information of at least two map elements is packaged for transmission, and optionally, an element group identification may be set for each group;
area-based transmission, for example, change information of a plurality of map elements belonging to a same map tile is packaged for transmission; and
type-based transmission, for example, change information of at least two map elements of a same change type is packaged for transmission.

The payload area in this embodiment of this application may also be understood as an area other than the header area in an area used to carry valid data. In this embodiment of this application, the payload area may also have another name. This is not limited in embodiments of this application. In this embodiment of this application, the payload area is divided into one or more element areas. The element area may also have another name, for example, a data entity area. This is not limited in embodiments of this application.

As shown in FIG. 4a, the payload area in the second preset format may include one or more element areas. In another possible implementation, the payload area includes M element areas, and M is a positive integer. One of the M element areas may carry information about one element. The element may be the foregoing target element or map element. The M element areas may be used to carry information about M elements, and the M element areas may be in a one-to-one correspondence with the M elements. When the first message is in the second preset format, one element in the M elements may be the map element. The M element areas shown in FIG. 4a are respectively an element area 1, ..., and an element area M. In this embodiment of this application, an element area of the payload area is used as an example for description. For another element area, refer to content of the element area. Details are not described again. For ease of subsequent reference, the element area is referred to as a second element area. The second element area may be one of the element area 1 to the element area M. For ease of description, an example in which the element area 1 is the second element area is used for description. One element area is used to carry related information about one element. For ease of reference in subsequent content, an element corresponding to information carried in the second element area is referred to as a second element.

It may be understood that the second element area carries information related to the second element. The following provides descriptions with reference to the second element and the second element area. For information about an element carried in another element area in the second preset format, refer to the related descriptions of the information about the second element carried in the second element area. Details are not described again.

When the format of the first message is the first message format, the second element may be referred to as the map element, and the second element may be a feature or a target. As shown in FIG. 4a, the payload area may carry one or more of information d1 to information d8 in the following content. The following information d1 to d8 merely show examples of several types of information that may be carried in the first message. During specific application, other content may be further carried in the payload area. This is not specifically limited in embodiments of this application.

The information d1 is an area identification corresponding to the second element.

The information d2 is a tile identification corresponding to the second element.

In this embodiment of this application, more fields may be set to provide more choices for a user. For example, if a range of an area is large, the second element may be limited with reference to these two fields: the area identification and the tile identification of the map.

For example, the area identification corresponding to the second element in the information d1 is, for example, a name of a road on which the second element is located. Generally speaking, a road is relatively long, and if the second element is limited by using only a road name, a range may be excessively large. Therefore, the road may be selected to be divided into a plurality of map tiles, and location information of the second element on the map is determined with reference to the tile identification and the area identification of the map.

In this embodiment of this application, the area identification and the tile identification of the second element may be referred to as map information corresponding to the second element, and the map information may be used to assist in locating the second element on the map.

The information d3 is an element group identification corresponding to the second element.

The elements may be divided into groups, and a group identification is allocated to each group, so that the first message carries the element group identification corresponding to the second element.

For example, the transmission type of the map element information is the group-based transmission, that is, the change information of at least two map elements may be packaged for transmission. Optionally, the element group identification may be set for each group.

The information d4 is a change type of the second element.

The change type of the second element may be, for example, the foregoing moving or adding.

The information d5 is location information of the second element.

In the information d5, the location information of the second element may be absolute characterization information, or may be relative change information.

When the location information of the second element is the relative change information, the location information of the second element may be obtained by comparing the location information of the second element with location information of a reference point. The location information of the reference point may be location information of the vehicle, location information of the second element before a change, or location information of another element.

The information d6 is a type of the location information of the second element.

The information d6 may indicate whether the location information of the second element is the relative change information or the absolute characterization information.

The information d7 is fourth indication information corresponding to the second element. The fourth indication information indicates at least one of environment information during collection of the second element by the sensor or obstructed information of the second element.

For descriptions of the fourth indication information corresponding to the second element, refer to the descriptions of the fourth indication information corresponding to the first element. Details are not described herein again.

The information d8 is fifth indication information corresponding to the second element. The fifth indication information indicates a trustworthiness degree of the information about the second element.

For descriptions of the fifth indication information corresponding to the second element, refer to the descriptions of the fifth indication information corresponding to the first element. Details are not described herein again.

FIG. 4b is a schematic diagram of a structure of an example of another possible second preset format. As shown in FIG. 4b, different from the second preset format shown in FIG. 4a, the second preset format shown in FIG. 4b includes a first subheader area and a second subheader area. Content in the payload area in FIG. 4b is the same as that in the payload area in FIG. 4a. Details are not described again.

In a possible implementation, data carried in the first subheader area is used to parse data carried in the second subheader area. In other words, the cloud server first parses content of the first subheader area, and then parses content of the second subheader area based on the parsed content. Compared with the solution in which the content of the entire header area needs to be parsed first in FIG. 4a, a content amount of the first subheader area is less than a content amount of the entire header area. Therefore, complexity of parsing the first subheader area is lower than complexity of parsing the entire header area at a time. Further, based on the content of the first subheader area, some information in the first message, such as the data type and the sensor type, may be learned, so that complexity of parsing the second subheader area can be reduced.

The content in the header area in FIG. 4a may be separately carried in the first subheader area and the second subheader area in FIG. 4b. In a possible implementation, when the header area carries the first indication information, the first indication information may be carried in the first subheader area. When the header area carries the second indication information, the second indication information may be carried in the first subheader area. When the header area carries the third indication information, the third indication information may be carried in the first subheader area. Information other than the first indication information, the second indication information, and the third indication information in the header area in FIG. 4a may be carried in the second subheader area.

It can be further learned from the foregoing content that, in this embodiment of this application, a plurality of types of data may be reported. Therefore, the cloud server can use more data as a reference when updating a map, so that accuracy of the map can be improved.

The terms "system" and "network" may be used interchangeably in embodiments of this application. "At least one" means one or more, and "a plurality of" means two or more. The term "and/or" describes an association relationship between associated objects and may indicate three relationships. For example, A and/or B may indicate the following cases: Only A exists, both A and B exist, and only B exists. A and B may be singular or plural. The character "/" generally indicates an "or" relationship between the associated objects. In addition, "at least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects. For example, a first vehicle and a second vehicle are merely intended to distinguish between different vehicles, but do not indicate that the two vehicles have different priorities, different importance degrees, or the like.

It should be noted that, names of the foregoing messages are merely examples. With evolution of communication technologies, the name of any foregoing message may be changed. However, regardless of how the names of the messages change, provided that meanings of the messages are the same as those of the messages in this application, the messages all fall within the protection scope of this application.

The foregoing mainly describes the solutions provided in this application from a perspective of interaction between the network elements. It may be understood that, to implement the foregoing functions, each network element includes a corresponding hardware structure and/or software module for executing each function. A person skilled in the art should easily be aware that, in combination with the units and algorithm steps in the examples described in embodiments disclosed in this specification, the present application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present application.

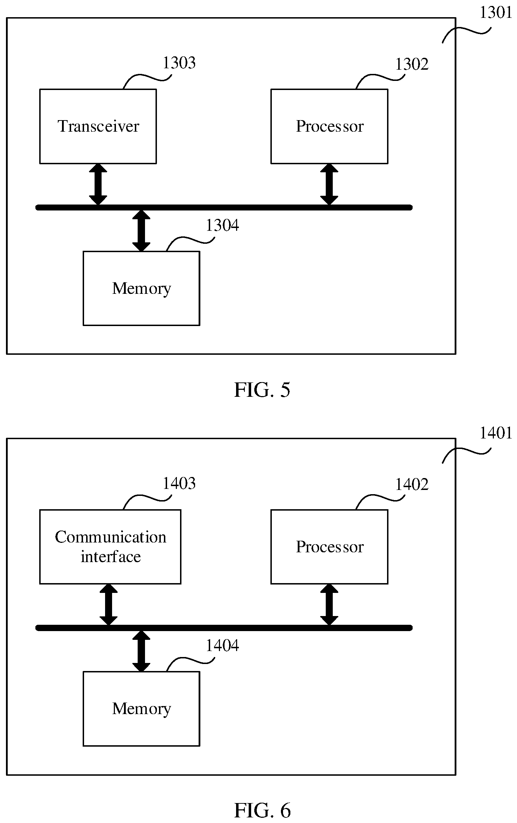

According to the foregoing method, FIG. 5 is a schematic diagram of a structure of a communication apparatus according to an embodiment of this application. As shown in FIG. 5, the communication apparatus may be a data transmission apparatus on a terminal device or a map update apparatus on a server. Alternatively, the communication apparatus may be a chip or a circuit, for example, a chip or a circuit that may be disposed in a data transmission apparatus on a terminal device, or a chip or a circuit that may be disposed in a map update apparatus on a server.

Further, the communication apparatus 1301 may further include a bus system. A processor 1302, a memory 1304, and a transceiver 1303 may be connected through the bus system.

It should be understood that the processor 1302 may be a chip. For example, the processor 1302 may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, the steps in the foregoing methods can be implemented by using a hardware integrated logic circuit in the processor 1302, or by using instructions in a form of software. The steps of the methods disclosed with reference to embodiments of this application may be directly performed and completed by a hardware processor, or may be performed and completed by using a combination of hardware and software modules in the processor 1302. A software module may be located in a mature storage medium in the art, like a random access memory, a flash memory, a read-only memory, a programmable read-only memory, an electrically erasable programmable memory, or a register. The storage medium is located in the memory 1304, and the processor 1302 reads information in the memory 1304 and completes the steps of the foregoing methods in combination with hardware of the processor 1302.

It should be noted that the processor 1302 in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in the decoding processor. A software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory 1304 in this embodiment of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. It is illustrated by way of example, and not limitation, that many forms of RAM are available, such as a static random access memory (Static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

When the communication apparatus 1301 corresponds to the data transmission apparatus in the foregoing methods, the communication apparatus may include the processor 1302, the transceiver 1303, and the memory 1304. The memory 1304 is configured to store instructions, and the processor 1302 is configured to execute the instructions stored in the memory 1304, to implement a related solution of the data transmission apparatus in any one or more of the corresponding methods shown in FIG. 2a.

When the communication apparatus 1301 is the data transmission apparatus on the terminal device, the processor 1302 is configured to: obtain first data, and generate a first message based on the first data. The first data is obtained based on data collected by at least one sensor. The first message includes the first data. The first message further includes at least one of first indication information, second indication information, and third indication information. The transceiver 1303 is configured to send the first message.

In a possible implementation, the data type of the first data includes at least one of raw data, feature level data, or object level data. The raw data is data collected by the sensor, the feature level data is data that is extracted from the raw data collected by the sensor and that can represent a feature of a detected object, and the object level data is data that is extracted from the raw data or the feature level data and that can represent an attribute of the detected object. Because the first indication information indicates a data type of the first data, when the first message includes the first indication information, a terminal device may be supported in reporting data of one or more data types. In this way, a cloud server may receive data of more data types, so that reliability of data fusion can be improved. In addition, based on the first indication information, the cloud server may decode the first message by using an algorithm corresponding to the data type of the first data, so that a decoding success rate can be increased.

Because the second indication information indicates a format of the first message, when the first message includes the third indication information, the terminal device may be supported in reporting data in a plurality of formats. In this way, flexibility of data reporting can be improved. In addition, based on the second indication information, the cloud server may decode the first message based on the format of the first message, so that a decoding success rate can be increased.

Because the third indication information indicates a type of the sensor, when the first message includes the third indication information, the terminal device may be supported in reporting data collected by one or more types of sensors. In this way, the cloud server may receive data collected by more types of sensors, so that reliability during data fusion can be improved. In addition, based on the third indication information, the cloud server may decode the first message by using an algorithm corresponding to the type of the sensor that collects data, so that a decoding success rate can be increased.

For the first data, the first message, the first indication information, the second indication information, the third indication information, and other descriptions, refer to the content in the foregoing method embodiments. Details are not described herein again.

When the communication apparatus 1301 corresponds to the map update apparatus on the server in the foregoing methods, the communication apparatus may include the processor 1302, the transceiver 1303, and the memory 1304. The memory 1304 is configured to store instructions, and the processor 1302 is configured to execute the instructions stored in the memory 1304, to implement a related solution of the map update apparatus on the server in any one or more of the corresponding methods shown in FIG. 2a.

When the communication apparatus 1301 is the map update apparatus on the server, the transceiver 1303 is configured to receive the first message. The processor 1302 is configured to: parse the first message to obtain the first data, and update a map based on the first data. The first data is obtained based on data collected by at least one sensor of a vehicle, and the first message includes the first data. The first message includes at least one of first indication information, second indication information, and third indication information.

For the first data, the first message, the first indication information, the second indication information, the third indication information, and other descriptions, refer to the content in the foregoing method embodiments. Details are not described herein again. For concepts, explanations, detailed descriptions, and other steps of the communication apparatus that are related to the technical solutions provided in embodiments of this application, refer to the descriptions of the content in the foregoing methods or other embodiments. Details are not described herein again.

According to the foregoing methods, FIG. 6 is a schematic diagram of a structure of a communication apparatus according to an embodiment of this application. As shown in FIG. 6, the communication apparatus 1401 may include a communication interface 1403, a processor 1402, and a memory 1404. The communication interface 1403 is configured to input and/or output information. The processor 1402 is configured to execute a computer program or instructions, so that the communication apparatus 1401 implements the method on the data transmission apparatus on the terminal device in the related solution in FIG. 2a, or the communication apparatus 1401 implements the method on the map update apparatus in the related solution in FIG. 2a. In this embodiment of this application, the communication interface 1403 may implement the solution implemented by the transceiver 1303 in FIG. 5, the processor 1402 may implement the solution implemented by the processor 1302 in FIG. 5, and the memory 1404 may implement the solution implemented by the memory 1304 in FIG. 5. Details are not described herein again.

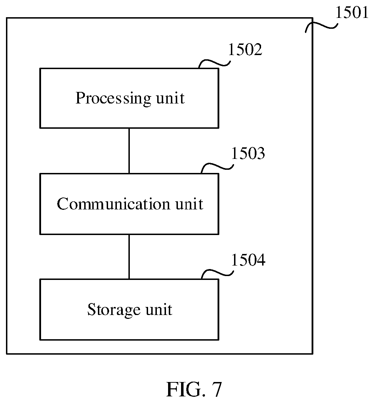

Based on the foregoing embodiments and a same concept, FIG. 7 is a schematic diagram of a communication apparatus according to an embodiment of this application. As shown in FIG. 7, the communication apparatus 1501 may be a data transmission apparatus on a terminal device or a map update apparatus on a server, or may be a chip or a circuit, for example, a chip or a circuit that may be disposed in a data transmission apparatus on a terminal device or a map update apparatus on a server.

The communication apparatus may correspond to the data transmission apparatus on the terminal device in the foregoing method. The communication apparatus may implement the steps performed by the data transmission apparatus on the terminal device in any one or more corresponding methods shown in FIG. 2a. The communication apparatus may include a processing unit 1502, a communication unit 1503, and a storage unit 1504.

The communication apparatus 1501 corresponds to the data transmission apparatus on the terminal device in the foregoing method. The processing unit 1502 is configured to: obtain first data, and generate a first message based on the first data. The first data is obtained based on data collected by at least one sensor. The first message includes the first data. The first message further includes at least one of first indication information, second indication information, and third indication information. The communication unit 1503 is configured to send the first message.

In a possible implementation, the data type of the first data includes at least one of raw data, feature level data, or object level data. The raw data is data collected by the sensor, the feature level data is data that is extracted from the raw data collected by the sensor and that can represent a feature of a detected object, and the object level data is data that is extracted from the raw data or the feature level data and that can represent an attribute of the detected object. Because the first indication information indicates a data type of the first data, when the first message includes the first indication information, a terminal device may be supported in reporting data of one or more data types. In this way, a cloud server may receive data of more data types, so that reliability of data fusion can be improved. In addition, based on the first indication information, the cloud server may decode the first message by using an algorithm corresponding to the data type of the first data, so that a decoding success rate can be increased.

Because the second indication information indicates a format of the first message, when the first message includes the third indication information, the terminal device may be supported in reporting data in a plurality of formats. In this way, flexibility of data reporting can be improved. In addition, based on the second indication information, the cloud server may decode the first message based on the format of the first message, so that a decoding success rate can be increased.

Because the third indication information indicates a type of the sensor, when the first message includes the third indication information, the terminal device may be supported in reporting data collected by one or more types of sensors. In this way, the cloud server may receive data collected by more types of sensors, so that reliability during data fusion can be improved. In addition, based on the third indication information, the cloud server may decode the first message by using an algorithm corresponding to the type of the sensor that collects data, so that a decoding success rate can be increased.

When the communication apparatus 1501 corresponds to the map update apparatus on the server in the foregoing method, the communication unit 1503 is configured to receive the first message. The processing unit 1502 is configured to: parse the first message to obtain the first data, and update a map based on the first data. The first data is obtained based on data collected by at least one sensor of a vehicle, and the first message includes the first data. The first message includes at least one of first indication information, second indication information, and third indication information.

For concepts, explanations, detailed descriptions, and other steps of the communication apparatus that are related to the technical solutions provided in embodiments of this application, refer to the descriptions of the content in the foregoing methods or other embodiments. Details are not described herein again.

It may be understood that for functions of the units in the communication apparatus 1501, refer to implementation of a corresponding method embodiment. Details are not described herein again.

It should be understood that division into units of the communication apparatus is merely logical function division. During actual implementation, all or some of the units may be integrated into a physical entity, or may be physically separated. In this embodiment of this application, the communication unit 1503 may be implemented by the transceiver 1303 in FIG. 5, and the processing unit 1502 may be implemented by the processor 1302 in FIG. 5.

According to the method provided in embodiments of this application, this application further provides a computer program product. The computer program product includes computer program code or instructions. When the computer program code or the instructions are run on a computer, the computer is enabled to perform the method according to any one of the embodiments shown in FIG. 2a.

According to the method provided in embodiments of this application, this application further provides a computer-readable storage medium. The computer-readable medium stores program code. When the program code is run on a computer, the computer is enabled to perform the method according to any one of the embodiments shown in FIG. 2a.

According to the method provided in embodiments of this application, this application further provides a chip system. The chip system may include a processor. The processor is coupled to a memory, and may be configured to perform the method in any one of the embodiments shown in FIG. 2a. Optionally, the chip system further includes a memory. The memory is configured to store a computer program (which may also be referred to as code or instructions). The processor is configured to: invoke a computer program from the memory, and run the computer program, so that a device on which the chip system is installed performs the method in any one of the embodiments shown in FIG. 2a.

According to the method provided in embodiments of this application, this application further provides a system, including the foregoing one or more vehicles and the map update apparatus on the server. The foregoing data transmission apparatus is disposed in the vehicle.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, the procedure or functions according to embodiments of this application are all or partially generated. The computer may be a generalpurpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state drive (solid state disc, SSD)), or the like.

It should be noted that a part of this patent application document includes copyrightprotected content. The copyright owner reserves the copyright except copies are made for the patent documents or the recorded content of the patent documents in the Patent Office.

The map update apparatus and the data transmission apparatus on the terminal device in the foregoing apparatus embodiments correspond to the map update apparatus or the data transmission apparatus on the terminal device in the method embodiments, and a corresponding module or unit performs corresponding steps. For example, a communication unit (a transceiver) performs a receiving or sending step in the method embodiments, and a processing unit (a processor) performs another step other than sending or receiving. For a function of a specific unit, refer to a corresponding method embodiment. There may be one or more processors.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one place, or may be distributed on a plurality of network units. Some or all of the units may be selected based on actual requirements to achieve the objectives of the solutions in embodiments.

In addition, function units in embodiments of this application may be integrated into one unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data transmission method for an internet of vehicles, comprising:

   obtaining (211) first data, wherein the first data is obtained based on data collected by at least one sensor;
   generating (212) a first message based on the first data, wherein the first message comprises the first data and first indication information,
   the first indication information indicates a data type of the first data,
   the data type of the first data comprises at least one of raw data, feature level data, or object level data,
   the raw data is data collected by the sensor,
   the feature level data is data that is extracted from the raw data collected by the sensor and that can represent a feature of a detected object, and
   the object level data is data that is extracted from the raw data or the feature level data and that can represent an attribute of the detected object; and
   sending (213) the first message to a map update apparatus;
   wherein the first message further comprises second indication information;
   the second indication information indicates a format of the first message; and
   the format of the first message comprises a first preset format or a second preset format, wherein
   when the first data comprises information about a target element collected by using the at least one sensor, the format of the first message is the first preset format, and the target element is a detected element not associated with an element on a map; or
   when the first data comprises information about a map element collected by using the at least one sensor, the format of the first message is the second preset format, and the map element is a detected element associated with an element on a map.

2. The method according to claim 1, wherein when the first data comprises the information about the map element collected by using the at least one sensor, the first data further comprises:
   map information corresponding to the map element.

3. The method according to claim 1 or 2, wherein the information about the map element comprises at least one of the following content:

   a map element that is in the map elements collected by the at least one sensor and that moves relative to a location of a corresponding map element in a current map; or
   a map element that is in the map elements collected by the at least one sensor and that has no corresponding map element in a current map.

4. The method according to any one of claims 1 to 3, wherein the first message comprises a header area and a payload area;

   the first indication information is carried in the header area; and
   the first data comprises information about at least one target element or map element collected by using the at least one sensor, the payload area comprises at least one element area, the information about the at least one target element or map element is carried in the at least one element area, and the information about the target element or the map element is in a one-to-one correspondence with the element area.

5. The method according to claim 4, wherein when the first data comprises the information about the map element collected by using the at least one sensor, the header area further comprises at least one of the following content: a map version number of the map element, a map tile number, a change type of the map element, a transmission type of the information about the map element, or a quantity of the map elements.

6. The method according to claim 4 or 5, wherein when the first data comprises the information about the map element collected by using the at least one sensor, the payload area further comprises at least one of the following content: an area identification corresponding to the map element, a tile identification corresponding to the map element, an element group identification corresponding to the map element, the change type of the map element, or a location information type of the map element.

7. The method according to any one of claims 4 to 6, wherein the header area comprises a first subheader area and a second subheader area; and

data carried in the first subheader area is used to parse data carried in the second subheader area.

8. The method according to claim 7, wherein the first indication information is carried in the first subheader area.

9. The method according to any one of claims 1 to 8, wherein the first message further comprises:

environment information during collection of the information about the target element or the map element by the sensor; or

obstructed information of the target element or the map element collected by the sensor.

10. The method according to any one of claims 1 to 9, wherein the first message further comprises third indication information; and

the third indication information indicates a type of the at least one sensor used to obtain the first data.

11. A data transmission apparatus applied to an internet of vehicles, the data transmission apparatus comprising units configured to perform the steps in the method according to any one of claims 1 to 10.

12. A computer-readable storage medium, comprising a program, wherein when the program is executed by a processor, the method according to any one of claims 1 to 10 is performed.

**Patentansprüche**

1. Datenübertragungsverfahren für ein Internet von Fahrzeugen, umfassend:

Erlangen (211) erster Daten, wobei die ersten Daten basierend auf Daten erlangt werden, die durch mindestens einen Sensor erfasst werden;

Erzeugen (212) einer ersten Nachricht basierend auf den ersten Daten, wobei die erste Nachricht die ersten Daten und erste Angabeinformationen umfasst,

die ersten Angabeinformationen einen Datentyp der ersten Daten angeben,

der Datentyp der ersten Daten mindestens eines aus Rohdaten, Merkmalsebenendaten oder Objektebenendaten umfasst,

die Rohdaten Daten sind, die durch den Sensor erfasst werden,

die Merkmalsebenendaten Daten sind, die aus den Rohdaten extrahiert werden, die durch den Sensor erfasst werden und die ein Merkmal eines erkannten Objekts darstellen können, und

die Objektebenendaten Daten sind, die aus den Rohdaten oder den Merkmalsebenendaten extrahiert werden und die eine Eigenschaft des erkannten Objekts darstellen können; und

Senden (213) der ersten Nachricht an eine Kartenaktualisierungsvorrichtung;

wobei die erste Nachricht ferner zweite Angabeinformationen umfasst;

die zweiten Angabeinformationen ein Format der ersten Nachricht angeben; und

das Format der ersten Nachricht ein erstes voreingestelltes Format oder ein zweites voreingestelltes Format umfasst, wobei wenn die ersten Daten Informationen über ein Zielelement umfassen, die unter Verwendung des mindestens einen Sensors erfasst werden, das Format der ersten Nachricht das erste voreingestellte Format ist und das Zielelement ein erkanntes Element ist, das nicht mit einem Element auf einer Karte verknüpft ist; oder wenn die ersten Daten Informationen über ein Kartenelement umfassen, die unter Verwendung des mindestens einen Sensors erfasst werden, das Format der ersten Nachricht das zweite voreingestellte Format ist und das Kartenelement ein erkanntes Element ist, das mit einem Element auf einer Karte verknüpft ist.

2. Verfahren nach Anspruch 1, wobei, wenn die ersten Daten die Informationen über das Kartenelement umfassen, die unter Verwendung des mindestens einen Sensors erfasst werden, die ersten Daten ferner Folgendes umfassen: Karteninformationen, die dem Kartenelement entsprechen.

3. Verfahren nach Anspruch 1 oder 2, wobei die Informationen über das Kartenelement mindestens einen der folgenden Inhalte umfassen:

ein Kartenelement, das sich in den Kartenelementen, die durch den mindestens einen Sensor erfasst werden, befindet und das sich relativ zu einer Lage eines entsprechenden Kartenelements in einer aktuellen Karte bewegt; oder

ein Kartenelement, das sich in den Kartenelementen, die durch den mindestens einen Sensor erfasst werden, befindet und das kein entsprechendes Kartenelement in einer aktuellen Karte aufweist.

4. Verfahren nach einem der Ansprüche 1 bis 3, wobei die erste Nachricht einen Header-Bereich und einen Nutzlastbereich umfasst;

die ersten Angabeinformationen in dem Header-Bereich enthalten sind; und
die ersten Daten Informationen über mindestens ein Zielelement oder Kartenelement umfassen, die unter Verwendung des mindestens einen Sensors erfasst werden, der Nutzlastbereich mindestens einen Elementbereich umfasst, die Informationen über das mindestens eine Zielelement oder Kartenelement in dem mindestens einen Elementbereich enthalten sind und die Informationen über das Zielelement oder das Kartenelement in einer Eins-zu-Eins-Entsprechung mit dem Elementbereich stehen.

5. Verfahren nach Anspruch 4, wobei, wenn die ersten Daten die Informationen über das Kartenelement umfassen, die unter Verwendung des mindestens einen Sensors erfasst werden, der Header-Bereich ferner mindestens einen der folgenden Inhalte umfasst:
eine Kartenversionsnummer des Kartenelements, eine Kartenkachelnummer, einen Änderungstyp des Kartenelements, einen Übertragungstyp der Informationen über das Kartenelement oder eine Menge der Kartenelemente.

6. Verfahren nach Anspruch 4 oder 5, wobei, wenn die ersten Daten die Informationen über das Kartenelement umfassen, die unter Verwendung des mindestens einen Sensors erfasst werden, der Nutzlastbereich ferner mindestens einen der folgenden Inhalte umfasst:
eine Bereichsidentifikation, die dem Kartenelement entspricht, eine Kachelidentifikation, die dem Kartenelement entspricht, eine Elementgruppenidentifikation, die dem Kartenelement entspricht, den Änderungstyp des Kartenelements oder einen Lageinformationstyp des Kartenelements.

7. Verfahren nach einem der Ansprüche 4 bis 6, wobei der Header-Bereich einen ersten Subheader-Bereich und einen zweiten Subheader-Bereich umfasst; und
Daten, die in dem ersten Subheader-Bereich enthalten sind, dazu verwendet werden, Daten zu parsen, die in dem zweiten Subheader-Bereich enthalten sind.

8. Verfahren nach Anspruch 7, wobei die ersten Angabeinformationen in dem ersten Subheader-Bereich enthalten sind.

9. Verfahren nach einem der Ansprüche 1 bis 8, wobei die erste Nachricht ferner Folgendes umfasst:

Umgebungsinformationen während der Erfassung der Informationen über das Zielelement oder das Kartenelement durch den Sensor; oder
verdeckte Informationen des Zielelements oder des Kartenelements, die durch den Sensor erfasst werden.

10. Verfahren nach einem der Ansprüche 1 bis 9, wobei die erste Nachricht ferner dritte Angabeinformationen umfasst; und
die dritten Angabeinformationen einen Typ des mindestens einen Sensors angeben, der dazu verwendet wird, die ersten Daten zu erlangen.

11. Datenübertragungsvorrichtung, die für ein Internet von Fahrzeugen angewendet wird, wobei die Datenübertragungsvorrichtung Einheiten umfasst, die dazu konfiguriert sind, die Schritte in dem Verfahren nach einem der Ansprüche 1 bis 10 durchzuführen.

12. Computerlesbares Speichermedium, umfassend ein Programm, wobei, wenn das Programm durch einen Prozessor ausgeführt wird, das Verfahren nach einem der Ansprüche 1 bis 10 durchführt wird.

**Revendications**

1. Procédé de transmission de données pour un Internet des véhicules, comprenant :

l'obtention (211) de premières données, dans lequel les premières données sont obtenues sur la base de données collectées par au moins un capteur ;

la génération (212) d'un premier message sur la base des premières données, dans lequel le premier message comprend les premières données et les premières informations d'indication,

les premières informations d'indication indiquent un type de données des premières données,

le type de données des premières données comprend au moins l'une des données brutes, des données de niveau de fonctionnalité, ou des données de niveau d'objet,

les données brutes sont des données collectées par le capteur, les données de niveau de fonctionnalités sont des données qui sont extraites des données brutes collectées par le capteur et qui peuvent représenter une fonctionnalité d'un objet détecté, et

les données de niveau d'objet sont des données qui sont extraites des données brutes ou des données de niveau de fonctionnalité et qui peuvent représenter un attribut de l'objet détecté, et

l'envoi (213) du premier message à un appareil de mise à jour de carte ;

dans lequel le premier message comprend également des deuxièmes informations d'indication ;

les deuxièmes informations d'indication indiquent un format du premier message ; et

le format du premier message comprend un premier format prédéfini ou un second format prédéfini, dans lequel lorsque les premières données comprennent des informations sur un élément cible collectées à l'aide de l'au moins un capteur, le format du premier message est le premier format prédéfini, et l'élément cible est un élément détecté non associé à un élément sur une carte ; ou

lorsque les premières données comprennent des informations sur un élément de carte collectées à l'aide de l'au moins un capteur, le format du premier message est le second format prédéfini, et l'élément de carte est un élément détecté associé à un élément sur une carte.

2. Procédé selon la revendication 1, dans lequel, lorsque les premières données comprennent les informations sur l'élément de carte collectées à l'aide de l'au moins un capteur, les premières données comprennent également :
des informations de carte correspondant à l'élément de carte.

3. Procédé selon la revendication 1 ou 2, dans lequel les informations sur l'élément de carte comprennent au moins l'un des éléments de contenu suivants :

un élément de carte qui est dans les éléments de carte collectés par l'au moins un capteur et qui se déplace par rapport à un emplacement d'un élément de carte correspondant dans une carte actuelle ; ou
un élément de carte qui est dans les éléments de carte collectés par l'au moins un capteur et qui n'a pas d'élément de carte correspondant dans une carte actuelle.

4. Procédé selon l'une quelconque des revendications 1 à 3, dans lequel le premier message comprend une zone d'en-tête et une zone de charge utile ;

les premières informations d'indication sont transportées dans la zone d'en-tête ; et
les premières données comprennent des informations sur au moins un élément cible ou un élément de carte collectées à l'aide de l'au moins un capteur, la zone de charge utile comprend au moins une zone d'élément, les informations sur l'au moins un élément cible ou élément de carte sont transportées dans l'au moins une zone d'élément, et les informations sur l'élément cible ou l'élément de carte sont dans une correspondance biunivoque avec la zone d'élément.

5. Procédé selon la revendication 4, dans lequel, lorsque les premières données comprennent les informations sur l'élément de carte collectées à l'aide de l'au moins un capteur, la zone d'en-tête comprend également au moins l'un des éléments de contenu suivants :
un numéro de version de carte de l'élément de carte, un numéro de tuile de carte, un type de modification de l'élément de carte, un type de transmission des informations sur l'élément de carte, ou une quantité d'éléments de carte.

6. Procédé selon la revendication 4 ou 5, dans lequel, lorsque les premières données comprennent les informations sur l'élément de carte collectées à l'aide de l'au moins un capteur, la zone de charge utile comprend également au moins l'un des éléments de contenu suivants :
une identification de zone correspondant à l'élément de carte, une identification de tuile correspondant à l'élément de carte, une identification de groupe d'éléments correspondant à l'élément de carte, le type de modification de l'élément de carte, ou un type d'informations d'emplacement de l'élément de carte.

7. Procédé selon l'une quelconque des revendications 4 à 6, dans lequel la zone d'en-tête comprend une première zone de sous-en-tête et une seconde zone de sous-en-tête ; et

des données transportées dans la première zone de sous-en-tête sont utilisées pour analyser des données transportées dans la seconde zone de sous-en-tête.

8. Procédé selon la revendication 7, dans lequel les premières informations d'indication sont transportées dans la première zone de sous-en-tête.

9. Procédé selon l'une quelconque des revendications 1 à 8, dans lequel le premier message comprend également :

des informations d'environnement pendant la collecte des informations sur l'élément cible ou l'élément de carte par le capteur ; ou
des informations obstruées de l'élément cible ou de l'élément de carte collectées par le capteur.

10. Procédé selon l'une quelconque des revendications 1 à 9, dans lequel le premier message comprend également des troisièmes informations d'indication ; et
les troisièmes informations d'indication indiquent un type de l'au moins un capteur utilisé pour obtenir les premières données.

11. Appareil de transmission de données appliqué à un Internet des véhicules, l'appareil de transmission de données comprenant des unités configurées pour réaliser les étapes du procédé selon l'une quelconque des revendications 1 à 10.

12. Support de stockage lisible par ordinateur, comprenant un programme, dans lequel le programme est exécuté par un processeur, le procédé selon l'une quelconque des revendications 1 à 10 est réalisé.

FIG. 1

```
┌──────────────────┐                    ┌──────────────────┐
│ Data transmission │                    │   Map update     │
│     apparatus     │                    │    apparatus     │
└──────────────────┘                    └──────────────────┘
         │                                        │
┌────────────────────────────────┐ 211            │
│ Obtain first data, where the    │               │
│ first data is obtained based on │               │
│ data collected by at least one  │               │
│ sensor                          │               │
└────────────────────────────────┘                │
         │                                         │
┌────────────────────────────────┐ 212            │
│ Generate a first message based  │               │
│ on the first data, where the    │               │
│ first message includes the first│               │
│ data, and the first message     │               │
│ further includes at least one of│               │
│ first indication information,    │               │
│ second indication information,   │               │
│ or third indication information  │               │
└────────────────────────────────┘                │
         │──── 213: Send the first message ───────►│
         │                                          │
         │        ┌──────────────────────────────────┐ 214
         │        │   Receive the first message       │
         │        └──────────────────────────────────┘
         │                                          │
         │        ┌──────────────────────────────────┐ 215
         │        │ Parse the first message to obtain │
         │        │         the first data            │
         │        └──────────────────────────────────┘
         │                                          │
```

FIG. 2a

| Header area | Payload area |
|---|---|
| Information a1: first indication information<br>Information a2: second indication information<br>Information a3: third indication information | |

FIG. 2b

| Header area | Payload area | |
| --- | --- | --- |
| | Element area 1 (first element area) | Element area M |
| Information a1: first indication information<br>Information a2: second indication information<br>Information a3: third indication information<br>Information a4: indication information indicating a version number<br>Information a5: timestamp information<br>Information a6: period count<br>Information a7: indication information indicating a quantity of target elements<br>Information a8: indication information indicating data quality<br>Information a9: indication information indicating an identification capability | Information b1: status information of a first element<br>Information b2: an identification of the first element<br>Information b3: a type of the first element<br>Information b4: location information of the first element<br>Information b5: shape information of the first element<br>Information b6: a signal value of the first element<br>Information b7: fourth indication information corresponding to the first element<br>Information b8: fifth indication information corresponding to the first element | ... |

FIG. 3a

| Header area | | Payload area | |
| --- | --- | --- | --- |
| First subheader area | Second subheader area | Element area 1 (first element area) | Element area M |
| Information a1: first indication information Information a2: second indication information Information a3: third indication information | Information a4: indication information indicating a version number Information a5: timestamp information Information a6: period count Information a7: indication information indicating a quantity of target elements Information a8: indication information indicating data quality Information a9: indication information indicating an identification capability | Information b1: status information of a first element Information b2: an identification of the first element Information b3: a type of the first element Information b4: location information of the first element Information b5: shape information of the first element Information b6: a signal value of the first element Information b7: fourth indication information corresponding to the first element Information b8: fifth indication information corresponding to the first element | ... |

FIG. 3b

| Header area | Element area 1 (second element area) | Element area M |
|---|---|---|
| Information c1: first indication information<br>Information c2: second indication information<br>Information c3: third indication information<br>Information c4: indication information indicating a version number corresponding to a map element<br>Information c5: timestamp information<br>Information c6: period count<br>Information c7: indication information indicating a quantity of map elements<br>Information c8: indication information indicating data quality<br>Information c9: indication information indicating an identification capability<br>Information c10: a map tile number<br>Information c11: indication information indicating a change type of the map element<br>Information c12: indication information indicating a transmission type of the map element | Information d1: an area identification corresponding to a second element<br>Information d2: a tile identification corresponding to the second element<br>Information d3: an element group identification corresponding to the second element<br>Information d4: a change type of the second element<br>Information d5: location information of the second element<br>Information d6: a type of the location information of the second element<br>Information d7: fourth indication information corresponding to the second element<br>Information d8: fifth indication information corresponding to the | ... |

FIG. 4a

| ← Header area → | | ← Payload area → |
|---|---|---|
| ← First subheader area → | ← Second subheader area → | ← Element area 1 (second element area) → \| ← Element area M → |

| First subheader area | Second subheader area | Element area 1 (second element area) | Element area M |
|---|---|---|---|
| Information c1: first indication information Information c2: second indication information Information c3: third indication information | Information c4: indication information indicating a version number corresponding to a map element Information c5: timestamp information Information c6: period count Information c7: indication information indicating a quantity of map elements Information c8: indication information indicating data quality Information c9: indication information indicating an identification capability Information c10: a map tile number Information c11: indication information indicating a change type of the map element Information c12: indication information indicating a transmission type of the map element | Information d1: an area identification corresponding to a second element Information d2: a tile identification corresponding to the second element Information d3: an element group identification corresponding to the second element Information d4: a change type of the second element Information d5: location information of the second element Information d6: a type of the location information of the second element Information d7: fourth indication information corresponding to the second element Information d8: fifth indication information corresponding to the second element | ... |

FIG. 4b

1301

1303

Transceiver

1302

Processor

1304

Memory

## FIG. 5

1401

1403

Communication
interface

1402

Processor

1404

Memory

## FIG. 6

1501

1502

Processing unit

1503

Communication unit

1504

Storage unit

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011576388

- WO 2020257642 A1

**Non-patent literature cited in the description**

- Intelligent Transport Systems (ITS); Vehicular Communications; Basic Set of Applications; Analysis of the Collective Perception Service (CPS); Release 2. *ETSI TR 103 562 V2.1.1*, 18 December 2019